(19) Europäisches Patentamt
European Patent Office
Office européen des brevets

(11) Publication number: **0 273 756 B1**

(12) # EUROPEAN PATENT SPECIFICATION

(45) Date of publication of patent specification: **21.04.93**

(51) Int. Cl.[5]: **B01J 20/32**, G01N 30/48

(21) Application number: **87311485.4**

(22) Date of filing: **29.12.87**

(54) **Active material useful as adsorbent comprising metal oxide/hydroxide particles reacted with one or more phosphorous-containing materials.**

(30) Priority: **29.12.86 US 946870**
**09.03.87 US 23312**
**09.03.87 US 23423**
**09.03.87 US 23429**

(43) Date of publication of application:
**06.07.88 Bulletin 88/27**

(45) Publication of the grant of the patent:
**21.04.93 Bulletin 93/16**

(84) Designated Contracting States:
**DE FR GB SE**

(56) References cited:
**EP-A- 0 023 300**
**US-A- 4 251 350**
**US-A- 4 308 079**

(73) Proprietor: **ALUMINUM COMPANY OF AMERICA**
**1501 Alcoa Building Mellon Square**
**Pittsburgh, PA 15219(US)**

(72) Inventor: **Wieserman, Larry F.**
**807 Shirlie Street**
**Apollo, PA(US)**
Inventor: **Martin, Edward S.**
**1046 Woodberry Road**
**New Kensington, PA(US)**
Inventor: **Wefers, Karl**
**528 Joyce Avenue**
**Apollo, PA(US)**
Inventor: **Novak, John W. Jr.**
**2510 Seventh Street Road**
**New Kensington, PA(US)**
Inventor: **Cross, Kathryn**
**3596 Clawson Drive**
**Murrysville, PA(US)**
Inventor: **Conroy, Christine M.**
**622 Jackson Drive**
**Apollo, PA(US)**

(74) Representative: **Baillie, Iain Cameron et al**
**c/o Ladas & Parry, Altheimer Eck 2**
**W-8000 München 2 (DE)**

EP 0 273 756 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to metal oxide/hydroxide particles with a monolayer of one or more phosphorous-containing organic materials having selected reactive sites thereon and to a process to form an active material useful as an adsorbent.

Analytical and industrial adsorbents made from organic resins suffer from poor physical strength, poor thermal stability, high cost, solvent swelling, and low capacity. Adsorbents made from metal oxides such as silica exhibit poor chemical stability at high pH. For many applications, in particular for high pressure and large separation columns, an adsorbent with high physical integrity, good chemical stability over high and low pH conditions, specific surface functionalities, good thermal stability, and low cost is needed for a wide range of applications.

Other metal oxides such as alumina have also been used as adsorbents because of the good physical integrity and low cost of alumina. The solubility of alumina in pH ranges between 4 and 9 is very low and the material is, therefore, chemically and physically stable in this pH range. However, beyond this pH range, on either the basic or acidic side, alumina becomes soluble in aqueous media and its physical strength and integrity degrade rapidly.

Modification of metal oxide adsorbents such as alumina and aluminosilicates have been proposed. Stockel U.S. Patent 4,506,628 teaches the formation of an adsorbent animal litter utilizing alumina, aluminosilicates, or coal residues as the substrate intimately mixed with monomers containing acid functionalities which polymerize in situ. The monomer, such as vinyl phosphonic acid, together with a redox catalyst, is mixed with a pliable dough formed from alumina and water and extruded into pellets which harden as the monomer polymerizes.

Modified alumina has also been used in the formation of catalysts. Johnson et al U.S. Patents 4,202,798 and 4,251,350 describe the formation of a hydrocarbon hydrotreating catalyst formed by contacting alumina with a phosphorous-containing acid compound such as phenylphosphonic acid and then calcining the phosphorous-containing hydrous alumina. The calcined alumina is then treated with at least one metal-containing compound and again calcined to form the catalyst product.

In addition, Cupery U.S. Patent 3,013,904 discloses a substrate having an organic polymer containing pentavalent phosphorous bonded thereto. Coatings of phosphorous-containing organic polymers are applied over coatings of positively charged colloidal metal oxides applied to negatively charged substrates. The thickness of the combined colloidal oxide and polymer layers on a substrate is less than 100 millimicrons.

Venables et al U.S. Patent 4,308,079 teaches the treatment of an aluminum oxide surface of a aluminum substrate with a monomolecular layer of an amino phosphonate compound such as nitrilotris (methylene) triphosphonic acid to retard hydration of the aluminum oxide to aluminum hydroxide to provide a more stable microporous surface which is particularly suited to commercial adhesives. The presence of the hydrated oxide is said to interfere with the formation of a satisfactory bond between the adhesive and the oxide, while the phosphonate treatment is said to inhibit the conversion of the oxide to hydroxide without interfering with subsequent bonding of the adhesive to the oxide.

In accordance with the present invention an active material is provided comprising a metal oxide/hydroxide particle having chemically bonded to reactive sites on the surface thereof a monomolecular layer of one or more types of phosphorous-containing organic molecules. The organic molecule is comprised of a phosphorous-containing group capable of forming a chemical bond with the reactive sites on the metal oxide/hydroxide particle and a carbon-containing group or site oriented away from the surface of the metal oxide/hydroxide particle and capable of functioning as the active component or site of the molecule.

In the accompanying drawings:

Figure 1 is a graph showing the weight percent of phosphorous adsorbed to forms of aluminum oxide/hydroxide as a function of acid concentration.

Figure 2 is a graph showing the weight percent of phosphorous adsorbed to forms of aluminum oxide/hydroxide as a function of aging time.

Figure 3 is a graph showing the concentration of phosphorous remaining in solution after filtration as a function of aging time.

Figure 4 is a graph showing the weight percent of phosphorous adsorbed to gamma alumina before and after washing as a function of acid concentration.

Figure 5 is a graph showing the weight percent of phosphorous adsorbed to gamma alumina before and after washing as a function of aging time.

Figure 6 is a graph of the pH of the solution plotted against time as an indication of phosphorous adsorption on aluminum oxide/hydroxide particles.

Figure 7 is a flowsheet illustrating the invention.

Figure 8 is an illustration of a metal oxide/hydroxide particle having a monolayer of phosphorous-containing material thereon. Figures 9A-9C are plots of chromatographic tests run on columns containing the packing material of the invention.

In accordance with one embodiment of the invention, the active material comprises a metal oxide/hydroxide particle having chemically bonded thereto a substantially monomolecular layer of a phosphorous-containing organic material wherein the organic molecule having the phosphorous-containing group is further comprised of a carbon-containing group oriented away from the surface of the metal oxide/hydroxide particle and capable of functioning as the active component of the molecule. This active material is suitable for use as an adsorbent which is stable over a large pH range, i.e., in some cases from 1-14, of from 2 to 11, and which, unlike at least some of the metal oxide/hydroxides useful as the support material, is insoluble in agueous media.

The active material also may be useful for: an analytical and preparative-scale chromatographic support; an ion exchange medium; a coupling agent for biological materials such as enzymes, whole cells, yeasts, proteins, microbes, pharmaceuticals--including timed-release drugs, and vaccines; stabilization of inorganic membranes used at high and low pH; coatings for piezoelectric crystals; spacer molecules for holding metal oxide particles apart; coatings for inorganic fillers and flame-retardants in polymers; coatings for inhibiting cation or anion adsorption (such as $F^-$ adsorption on alumina); formation of hydrophobic surfaces on metal oxides to control wetting and dispersion properties in fluid media; controlling surface charge in fluid media; promoters for adhesive bonding of metals, ceramics and polymers; coupling agents for immobilizing optically active molecules (chirality) for selective adsorption of optically active compounds (d or l isomers); surface modification for passivating surfaces of biological implants (e.g., bones, joints, teeth); additives to medicinal products (extenders, coloring agents, flavorings for toothpaste, creams); improve bonding between electrical insulation and a metal conductor (decrease delamination from weathering); controlling the abrasive properties of metal oxides powders; complexing agents for catalytically active metals for improved metal dispersion; producing stain and wear resistant coatings for plastic, concrete, or soft metal wear surfaces; selective adsorption of toxic liquids or gases without adsorbing water; coupling agents for coloring polymers and paints; preservative coatings for natural products such as wood, straw, and stone to increase surface hardness, stain resistance, and color fastness; coating to increase the efficiency of photon radiation by enhanced absorption and/or light scattering; coating with bacteriostatic properties for pharmaceutical products, treating fabrics, and wood (e.g., treating wood shingles to inhibit formation of mold, mildew, and rot); flocculating agents for colloidal dispersions; metal chelating agents; an additive to polish and waxes as extender and anti-wetting agent. Further, the active material also may be useful in diagnostic testing devices or processes or in therapeutic devices or processes. The active material may be applied to membranes such as inorganic membranes and may be used in reverse osmosis dialysis and ultrafiltration.

The use of the term "active material" is intended to define an organic molecule comprising a monomer, oligomer or short chain polymer having a phosphorous-containing group, preferably at the end of the molecule, capable of bonding to the metal oxide/hydroxide support and having one or more sites thereon, preferably at the opposite end of the molecule, which may be used for the coupling, bonding, or adsorbing, etc. of atoms, ions or other molecules thereto, e.g., when the active material functions as an adsorbent, the active material will have sites available on the molecule to which the material to be adsorbed will be attracted.

The use of the term "metal oxide/hydroxides" herein is intended to define a broad spectrum of oxides ranging from those which may contain few hydroxides, e.g., activated or calcined forms of aluminum oxide (alumina) to more hydrated forms which may comprise mainly hydroxide, e.g. $Al(OH)_3$. It has been found however, that the metal hydroxide form, rather than the metal oxide form, provides a better bond with the phosphorous-containing group on the organic molecule with which it is reacted. However, for certain applications, dehydrated or activated forms of the metal oxide/hydroxide may be preferred due to the higher surface area of such particles. For example, when aluminum oxide/hydroxide is used, the hydrated form will be preferred, e.g., gibbsite, bayerite, or boehmite will be preferred when a large external surface area is desired and activated alumina will be preferred when it is desirous that the metal oxide/hydroxide have a high internal surface area.

As presently understood, the metal oxide/hydroxides suitable for use in the present invention usually require hydroxyl groups on the surface thereof for purposes of providing bonding sites for the phosphorous-containing organic materials. For example, when the particulate material is alumina, hydroxyl groups on the surface of the alumina react with the phosphorous-containing group or groups of the organic molecule, i.e., with the -POOH acid group of the phosphonic or phosphinic acid, or with the -PO(OH) group of the phosphoric acid monoester or the phosphoric acid diester or organic phosphoramidates or organic

thiophosphates. When using an organic solvent, particularly where the solvent is immiscible with water, a monolayer of hydroxyl groups is provided on the alumina particles for purposes of reacting to form a chemical bond with the phosphonic or phosphinic acid groups or with the phosphoric acid group(s) of the phosphoric acid mono or diester. It will be appreciated that if more than a monolayer of hydroxyl units is present on the alumina surface, such as hydroxyl units present as a result of water, this additional water layer can act to hinder the reaction. Thus, while it is preferred to have a maximum of a monolayer of hydroxyl units, less than a complete surface layer of hydroxyl units can be present on the metal oxide and such does not hinder reactivity.

Metal oxide/hydroxides which may be used as the support particle for reaction with the phosphorous-containing organic material include any metal capable of forming oxide/hydroxide selected from the class consisting of groups IB, IIA, IIB, IIIA, IVA, VA, IIIB, IVB, VB, VIB, VIIB and VIII, and combinations thereof. For example, the oxide/hydroxides of aluminum, magnesium, titanium, zirconium, iron, silicon, chromium, zinc, vanadium, and combinations of these may be used. Also, a core or center of iron oxide/hydroxide or other paramagnetic or diamagnetic material may be used with a coating of a metal compound to take advantage of the magnetic properties of the iron oxide/hydroxide as an adsorbent. It should be noted that by use of the term "metal", it is intended to include not only the traditional metals, but also materials sometimes referred to as metalloids such as Si, Se, B, As and Te and to exclude the remaining elements referred to as nonmetals in the periodic table. In addition, oxides/hydroxides of the lanthanide series, as well as oxides/hydroxides of thorium and uranium in the actinide series, may be used as the support particle.

While the invention is primarily directed to the use of metal oxide/hydroxide particles as support materials for reaction with the phosphorous-containing organic molecules to form the active material, it is within the purview of this invention that other metal compounds could be used in substitution for the metal oxide/hydroxides such as metal silicates, oxalates, phosphates, sulfates, carbonates, apatites, hydrotalcites, zeolites, kaolin, clays and chromates as well as combinations of such materials or combinations of any of such materials with the preferred metal oxide/hydroxide support materials.

With respect to the metal oxide/hydroxides used in the present invention, it is preferred that they are provided in particulate form for certain applications. When the use is adsorbents, particle sizes can range from as low as 5.0 nm to provide large external surfaces and up to 12 millimeters for large reactors. When the adsorbent base is alumina the particle size can be 1 to 200 µm. It will be appreciated that other uses, for example, flocculation, flame retardant in polymers, heterogeneous catalyst, can require different particle sizes. However, normally for adsorbent use, the particle size is greater than 1 micron. Typical particle size distributions, when the metal oxide/hydroxide particles comprise aluminum oxide/hydroxide (alumina), are 1, 3-6, 7-12, 10-18, 18-32, 32-63, and 50-200 microns.

With respect to particle size morphology of the metal oxide/hydroxides used in the invention, e.g., metal oxide/hydroxides such as alumina, or iron oxide, for purposes of the present invention, it is preferred that they have a pore size of 2.0 nm to 10 µm in diameter. Further, it is preferred that the particles have a pore volume of 0.1 to 1.5 ml/g. With respect to purity, the level of impurity should be minimized depending on the end use. However, for adsorbents, for example, the metal oxide or metal compound should have a purity level of over 80%, preferably 95% or greater. Surface area of the particle is preferred to be high with typical surface areas for alumina, for example, being in the range of 0.10 to 600 $m^2/g$ and up to 1000 $m^2/g$ for other metal oxide/hydroxides such as silica.

To produce the active material comprising the metal oxide/hydroxide reacted with one or more types of phosphorous-containing organic molecules, the metal oxide/hydroxide, such as alumina, may be reacted with a phosphonic or phosphinic acid or with a phosphoric acid monoester or diester in an aqueous media at a temperature of from about 25° C. up to about 90° C., preferably about 50° C., for a period of from at least 0.1 to not more than 20 hours, and preferably from at least about 0.5 hours up to about 4 hours, using an initial acid concentration of at least about 0.0001 to 0.1 molar. In some instances higher concentrations may be desired. When the media is non-aqueous, the temperature range can be greatly extended. For example, it may range from 5° C. or lower to 200° C. or sometimes higher depending on the liquid medium.

In the present invention, the weight of the monolayer can range from about 0.01 to 90 wt.% calculated on the total weight of the coated metal oxide, and preferably the monolayer can range from about 4 to 50 wt.%, typically 5 to 20 wt.%. When the metal oxide/hydroxide particle is very small, the monolayer weight can be equal to or greater than the weight of the particle. For purposes of ensuring that a monolayer of phosphonated organic material is bonded to the metal oxide particles, the application should be carefully controlled. That is, a monolayer can be obtained, for example, by controlling the viscosity of the aqueous media, the time of exposure in the media, the concentration of phosphorous-containing organic material in the media, or the concentration of hydroxyl units on the metal oxide particles. In addition, to ensure a monolayer, after formation of the active material, it may be treated in an organic solvent, a basic or acidic

solution, or combinations thereof. An example is $NaHCO_3/Na_2CO_3$ washing solution having a pH of about 10, to remove weakly adsorbed molecules on the particles. This ensures that all of the molecules remaining are bonded to the hydroxyl groups on the metal oxide/hydroxide surface and not to one another, thus assuring formation of the desired monomolecular layer stable over a wide range of pH.

The formula for the phosphonic acid useful in the practice of the invention may be written as $RPO(OH)_2$ while the phosphinic acid may be written as RR'PO(OH) where R' may be hydrogen and both R and R' may each be comprised of 1-30, preferably 5-30, carbon-containing molecules such as an alkyl group. Other examples of groups which may comprise R and/or R' include long and short chain aliphatic hydrocarbons, aromatic hydrocarbons, carboxylic acids, aldehydes, ketones, amines, amides, thioamides, imides, lactams, anilines, pyridines, piperidines, anhydrides, carbohydrates, thiocyanates, esters, lactones, ethers, alkenes, alkynes, alcohols, nitriles, oximes, organosilicones, sulfur containing organic compounds, ureas, thioureas, perfluoro organic molecules, perchloro organic molecules, perbromo organic molecules and combinations of these groups.

The formulas for the phosphoric acid esters useful in the practice of the invention may be written as $(RO)PO(OH)_2$ (phosphoric acid monoester or monophosphate) while the phosphoric acid diester may be written as (RO)(R'O)PO(OH), R and R' may be organic groups containing 1 to 30 carbon atoms, preferably 5-30, carbon-containing molecules such as an alkyl group. Other examples of groups which may comprise R and/or R' include long and short chain aliphatic hydrocarbons, aromatic hydrocarbons, carboxylic acids, aldehydes, ketones, amines, amides, thioamides, imides, lactams, anilines, pyridines, piperidines, anhydrides, carbohydrates, thiocyanates, esters, lactones, ethers, alkenes, alkynes, alcohols, nitriles, oximes, organosilicones, sulfur containing organic compounds, ureas, thioureas, perfluoro organic molecules, perchloro organic molecules, perbromo organic molecules and combinations of these groups.

The phosphorous-containing organic molecules such as listed above may also include inorganic groups substituted thereon such as halogens, nitrates, phosphates, phosphinates, phosphinites, phosphonates, quaternary ammonium salts, and the like. While it is preferred that the free end of the organic group extends away from the surface of the metal compound particle, it is within the scope of the present invention to provide, on the free end of the molecule, one or more functional groups. A functional group may be defined as the group on the molecule which enables the reactive material (comprising the phosphorous-containing organic material bonded to the metal oxide/hydroxide surface) to react with, attract, couple to, bond with, etc. other atoms, ions and/or molecules. Intermediate groups may be defined as the groups on the molecule which permit substitution or addition of groups or compounds to the R or R' groups after the monolayer has been formed on the oxide/hydroxide particle. Examples of intermediate groups include I, Cl, Br, CN, etc. The intermediate group permits the addition of groups or radicals which would not be compatible with or be destroyed during formation of the monolayer. Thus, this permits the addition of functional groups on the end of the R or R' group after the monolayer is formed. By attaching specific functional groups, either organic or inorganic, to the R and R' groups of the phosphonic and phosphinic acids, a wide variety of adsorbent selectivities and capacities are provided.

The functional groups attached to or contained within the free end can be selected from cation exchange functional groups and anion exchange functional groups such as $-HSO_3$, $-N(CH_3)_3Cl$, -COONa, $-NH_2$ and -CN, for example. The $-HSO_3$ functional group permits removal of cations such as $Cu^{+2}$, $Fe^{+2}$, $Co^{+2}$, $Cd^{+2}$, $Ca^{+2}$, $Sr^{+2}$, $Hg^{+2}$, $Pb^{+2}$, $Ba^{+2}$ and $Be^{+2}$ from aqueous media. The functional group, $-CH_2N^{+}-(CH_3)_3Cl$, permits removal of anions such as $HSO_4^-$ , $ClO_3^-$ , $NO_3^-$ , $NO^{-}{}_{2}$, $HPO_4^-$ , formate, citrate. Other examples of functional groups that may terminate the free end of the phosphonate bonded hydrocarbon chain include the following: a carboxyl group, e.g., a carboxymethyl group, a glucose group, a monoclonal antibody, a cyano group (-C≡N), a phenyl group, a diphenyl group, a tertiary butyl group, a sulfonic group, a benzyl sulfonic group, protein groups such as protein A (staphylococcal protein A), protein G, immunoglobulins and binders thereof, pharmaceutical compounds, yeasts, microbes, whole cells, enzyme groups, dye molecules, chelated metal groups, tag molecules and combination of these groups. Further, it should be noted that the carbon group can be a saturated or unsaturated carbon chain.

It will be noted that the R or R' groups are always monomers or oligomers. Preferably, the oligomers have a molecular weight of less than 2000. By the use of monomer herein is meant to include a chemical compound that can undergo polymerization. By oligomer is meant a polymer or polymer intermediate containing relatively few structural units, i.e., a polymer containing 2-4 monomers.

While we do not wish to be bound by any particular theory of bonding, it is believed that when a metal oxide/hydroxide particle, for example, alumina, is brought into contact with the phosphoric acid monoester or phosphoric acid diester, a reaction or adsorption of the acid on the alumina takes place in which the aluminum and phosphorous atoms in the respective molecules are apparently bonded together through an oxygen atom as illustrated in the formulas below:

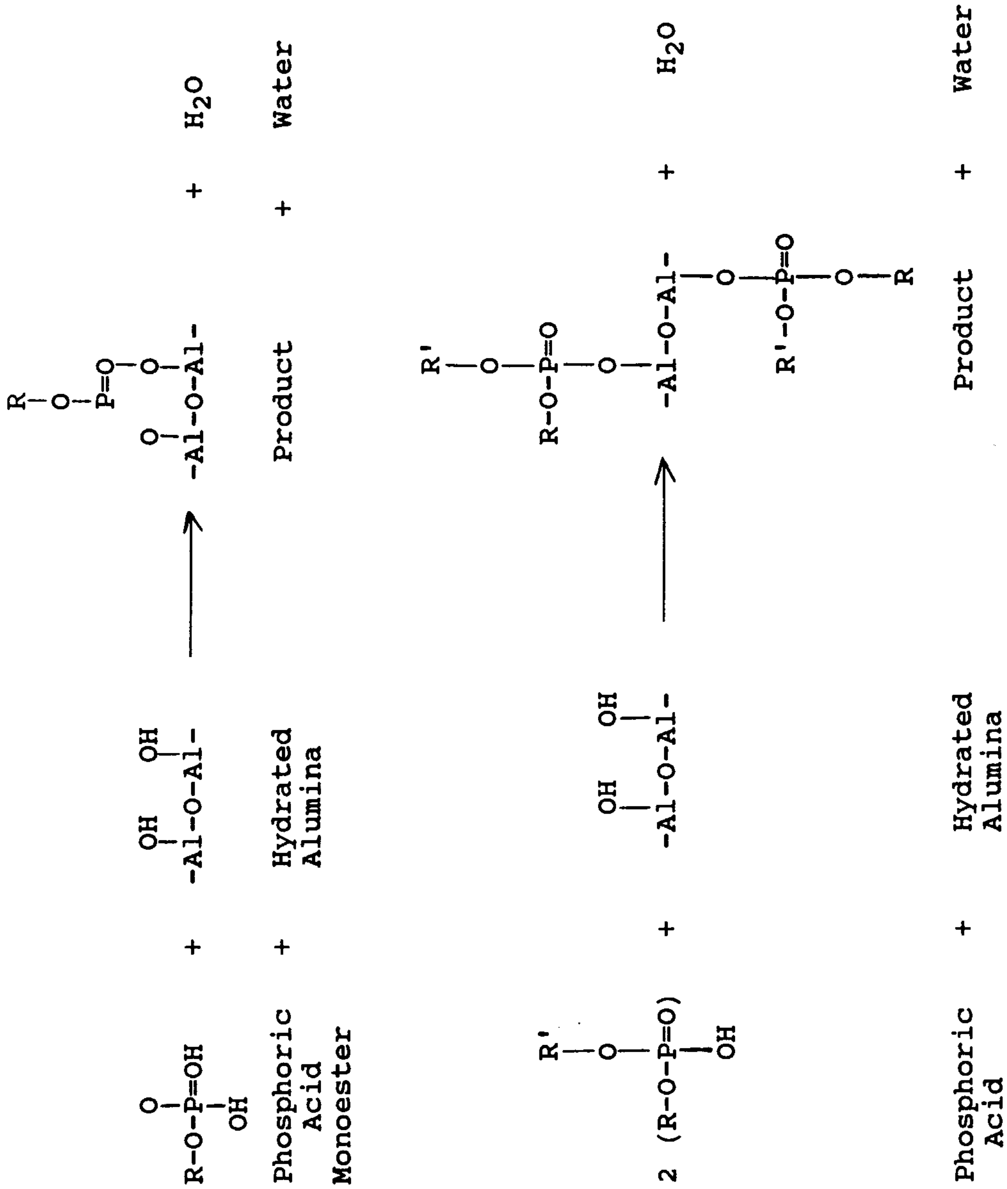


Note: Aluminum ions may be an octrahedrally or tetrahedrally coordinated cation with or without coordination vacancies at or near the surface (external or within pore structures).

Also, while we do not wish to be bound by any particular theory of bonding, it is believed that when a metal oxide/hydroxide particle, for example, alumina, is brought into contact with the phosphonic or phosphinic acid a reaction or adsorption of the acid on the alumina takes place in which the aluminum and phosphorous atoms in the respective molecules are apparently bonded together through an oxygen atom as illustrated in the formulas below:

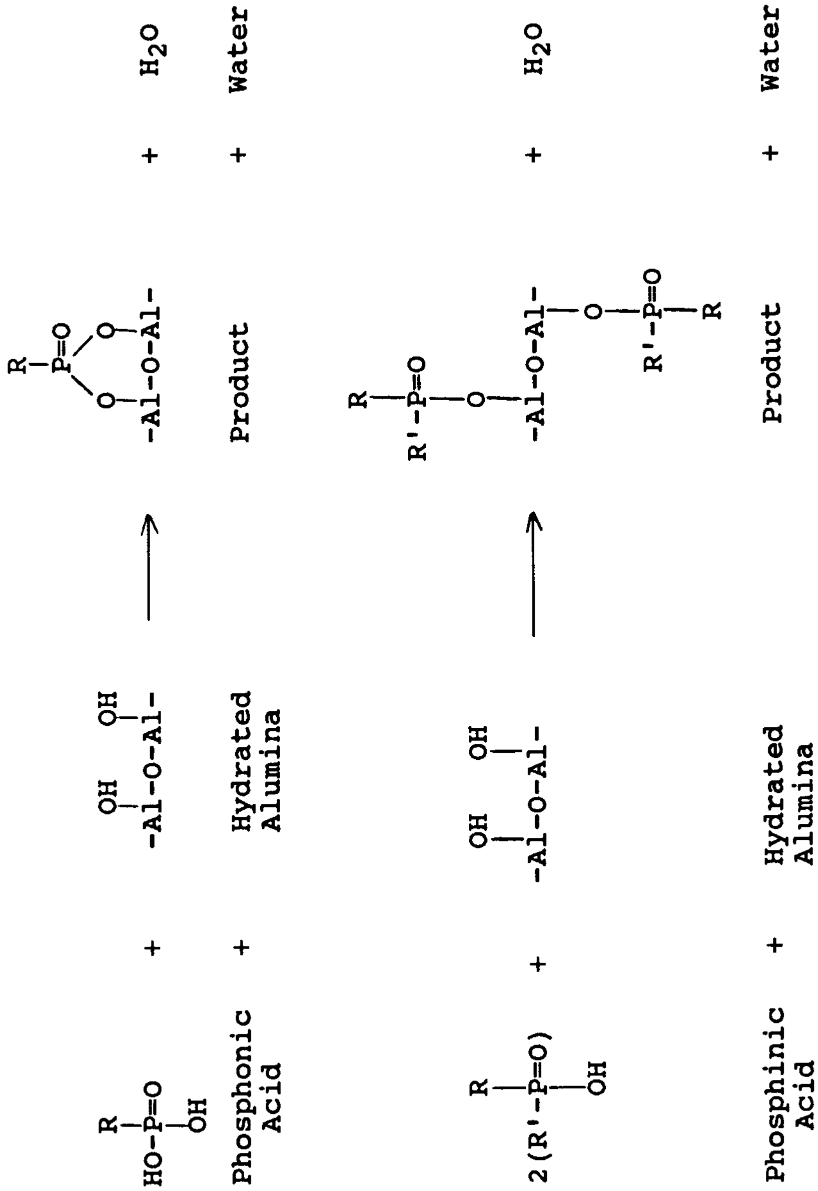


Note: Aluminum ions may be an octrahedrally or tetrahedrally coordinated cation with or without coordination vacancies at or near the surface (external or within pore structures).

Thus it can be seen, using the above proposed models, that if all of the exposed hydroxyl groups' on the surface of the alumina can be reacted with the phosphonic or phosphinic acid groups, or with the phosphoric acid monoester or diester Groups, the surface chemistry of the reacted alumina will be changed. Furthermore, the type of organic radical attached to said Groups can be tailored to achieve certain types of affinities to provide selectivity in the adsorption characteristics of the product. For example, when an alumina treated with a phosphonic or phosphinic acid having a octadecyl R group is used, or when an alumina treated with a phosphoric acid monoester or phosphoric acid diester having a dodecyl R group is used, the following type of selectivity can be achieved. For example, p-nitroaniline, methyl benzoate, phenetole, and o-xylene under chromatographic conditions can be selectively adsorbed on such a reactive

material in accordance with the present invention.

The chemical bonding of the phosphonic or phosphinic acid, or of the phosphoric acid monoester or phosphoric acid diester to the metal oxide/hydroxide particle, e.g. alumina particle, is illustrated in Figure 8 wherein the center represents the alumina particle having a surface 50. The carbon-containing molecule is chemically bonded at one end to surface 50 by means of a phosphorous-oxygen-metal bond. As presently understood, it is preferred that the other or free end of the carbon-containing molecule extends away from the surface of the particle, as shown in Figure 8. Further, it is important to control the application or bonding of the phosphonic or phosphinic acid, or of the phosphoric acid monoester or phosphoric acid diester to the metal oxide/hydroxide support so as to obtain a monolayer bonded to the metal oxide/hydroxide particle as illustrated in Figure 8.

By "monolayer" or "monomolecular layer" is meant that 90%, and preferably 98%, of the phosphonic or phosphinic acid molecules are bonded to the metal oxide/hydroxide particle as a single layer of molecules. Thus, the application should be controlled so as to prevent the R or R' groups from bonding to each other to form weakly adsorbed multilayers which would then provide further hydroxyl units, i.e., -POOH units directed away from and not bonded to the surface of the metal oxide/hydroxide particles, thereby defeating the purpose of the invention, for example, when it is used for an adsorbent. The thickness of the phosphorous-containing bonded organic monolayer is in the range of 1-500 nm and preferably 2 to 50 nm.

As noted earlier, while it is desired to avoid organic polymers where the chain has repeating phosphorous-containing groups which can bond to the metal oxide particle surface, oligomers having preferably a single phosphorous-bonding group are utilized. The single phosphorous-bonding group permits the oligomer to have a free end which extends away from the metal oxide particle surface. Additionally, the monomer or oligomer comprising the monolayer may have reactive sites which can permit crosslinking so as to polymerize monomers or oligomers already bonded to the surface of the metal oxide particle.

In the present invention, particularly when the end use is an adsorbent, it is preferred that the monomer or oligomer used is at least a five-carbon chain. The chain can have 20 to 30 or more carbons, as noted earlier. The longer chains preferably are used in the initial bonding or loading of the metal oxide particle with the phosphorous-containing carbon material. However, because of the pores and fissures that can be present on the metal oxide particle, particularly those having high surface area, often all the surface hydroxyl units are not reacted because of the inability of the longer chain phosphorous-containing organic material to reach or to diffuse into the pores and fissures. Thus, to inert or block remaining reactive sites, short-chain monomers or oligomers, e.g., less than 6 carbon molecules per chain, can be used. In this way, all of the reactive sites are capped or blocked. That is, for capping off the reactive sites, short-chain monomers can be used. For example, an alumina treated with a high molecular weight phosphonic or phosphinic acid, e.g. an n-heptadecylphosphonic acid, may be further treated with a low molecular weight phosphonic acid, e.g., methylphosphonic acid, to treat any remaining unreacted alumina surface areas. Also, for example, an alumina treated with a high molecular weight phosphoric acid monoester or phosphoric acid diester, e.g. an n-dodecylphosphoric acid, may be further treated with a low molecular weight phosphoric acid, e.g., methylphosphoric acid, e.g., methylphosphoric acid or a mixture of methyl phosphoric acid and dimethyl phosphoric acid, to treat any remaining unreacted alumina surface areas.

A further embodiment of this invention relates to bonded, e.g., affinity or reverse phase chromatography column packing material. More particularly, this invention relates to such a packing material comprising a metal oxide/hydroxide reacted with phosphonic acid to form a monomolecular layer thereon thereby providing a reverse phase chromatographic packing material having good pH stability as well as high efficiency.

Chromatographic packing materials made from organic resins suffer from poor physical strength, poor thermal stability, high cost, solvent swelling, and low capacity. Chromatographic packing materials made from metal oxides such as silica exhibit poor chemical stability at high pH. For many applications, in particular for reverse phase chromatography, a chromatographic packing material with high physical integrity, good chemical stability over high and low pH conditions, specific surface functionalities, good thermal stability, and low cost is needed.

In said further embodiment, a chromatographic packing material is provided comprising a metal oxide/hydroxide particle having chemically bonded to reactive sites on the surface thereof a monomolecular layer of one or more phosphonic acids with the non-polar portion of the molecule oriented away from the surface of the metal oxide/hydroxide particle for interaction with organic materials being passed through the chromatrography column.

In accordance with said further embodiment of the invention, the chromatographic packing material comprises a metal oxide/hydroxide particle having chemically bonded thereto a substantially monomolecular layer of one or more phosphonic acids.

By reverse phase chromatography is meant that the adsorbent is less polar than the eluding solvent, and in normal phase chromatography the adsorbent is more polar than the eluding solvent. That is, in reverse phase chromatography, the more non-polar sample components interact more with the relatively non-polar column packing and thus elute later than polar sample components. Typical mobile phases for reverse phase chromatography are aqueous buffers, water, methanol, acetonitrile, tetrahydrofuran, and mixtures of water or buffer with these organic solvents.

To produce the chromatographic packing material comprising the metal oxide/hydroxide reacted with one or more phosphonic acids, the metal oxide/hydroxide, such as alumina, may be reacted with a phosphonic acid in an aqueous media at a temperature of from about 25° C. up to about 90° C., preferably about 25° C., for a period of from at least 0.1 to not more than 20 hours, and preferably from at least about 0.5 hours up to about 4 hours, using an initial acid concentration of at least about 0.0001 molar up to about 0.1 molar. In some instances, higher concentrations may be desirable. When the media is nonaqueous, the temperature range can be greatly extended. For example, it may range from 5° C. or lower up to 200° C. or sometimes higher depending upon the particular liquid media.

For purposes of ensuring that a monolayer of phosphonic acid is bonded to the metal oxide particles, the application should be carefully controlled. That is, a monolayer can be obtained, for example, by controlling the viscosity of the media, the time of exposure in the media, the concentration of phosphorous-bonding hydroxyl units in the media, or the concentration of hydroxyl units on the metal oxide particles.

The reverse phase chromatographic packing material used as a column packing material for reverse phase chromatography, comprises a metal oxide/hydroxide, preferably aluminum oxide/hydroxide, having a particle size range of from about 0.5-300 µm, preferably about 1-80 µm with a pore diameter size of from 2-100,00 nm, preferably about 4-100 nm, with a pore volume of about 0.1-2 milliliters/gram, preferably about 0.5-1.5 milliliters/gram, e.g., 0.3 to 0.8 milliliters/gram.

The reverse phase chromatographic packing material further comprises from 1-75 wt.% (calculated on total weight of the packing material), preferably 4-50 wt.%, and typically 5-20 wt.% of one or more phosphonic acids bonded as a monomolecular layer to the reactive sites on the surface of the aluminum oxide/hydroxide support material. The phosphonic acids bonded to the support material preferably comprise a mixture of from 2 to 97 wt.%, preferably 25-95 wt.%, (based on total weight of phosphonic acids) of one or more phosphonic acids having the formula $RPO(OH)_2$ wherein R is a 5-30 carbon saturated or unsaturated aliphatic hydrocarbon or aromatic hydrocarbon and from 5-75 wt.% of one or more phosphonic acids having the formula $R'PO(OH)_2$ wherein R' is a 1-4 carbon saturated or unsaturated aliphatic hydrocarbon.

Preferably R' is a single carbon radical, i.e. methyl phosphonic acid which is reacted with the aluminum oxide/hydroxide surface after treatment with the longer chain phosphonic acid to react with any remaining hydroxyl groups on the aluminum oxide/hydroxide surface to provide good peak symmetry for the materials being passed through the column for analysis.

It will be noted that the R group is always a monomer or oligomer. Preferably, the oligomer has a molecular weight of less than 2000. By the use of monomer herein is meant to include a chemical compound that can undergo polymerization. By oligomer is meant a polymer or polymer intermediate containing relatively few structural units, i.e., a polymer containing 2-4 monomers.

While we do not wish to be bound by any particular theory of bonding, it is believed that when a metal oxide/hydroxide particle, for example, alumina, is brought into contact with the phosphonic acid (containing either the long chain or the short chain carbon group previously discussed) a reaction or adsorption of the acid on the alumina takes place in which the aluminum and phosphorous atoms in the respective molecules are apparently bonded together through an oxygen atom as illustrated in the formulas below (in which formula R may represent, for purposes of illustrating the reaction, either the long chain R group or the short chain R' group previously discussed):

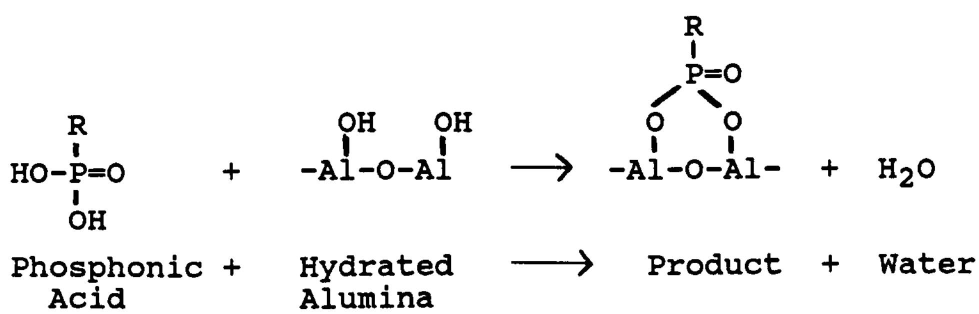

Thus it can be seen, using the above proposed model, that if all of the exposed hydroxyl groups on the surface of the alumina can be reacted with the phosphonic acid groups, the surface chemistry of the reacted alumina will be changed. For example, when an alumina treated with a phosphonic acid having a octadecyl R group is used, for example, p-nitroaniline, methyl benzoate, phenetole, and o-xylene under chromatographic conditions can be selectively adsorbed on such a chromatographic packing material in accordance with the present invention.

The available surface area, both outside and inside of the pores, will be somewhat dependent upon the relationship between the pore size of the aluminum oxide/hydroxide support material and the length of the R group on the phosphonic acid. If the pore size is small with respect to the size of the R group on the phosphonic acid molecule, the phosphonic acid may or may not be able to enter into the pores, thereby changing the effective area available for interaction with the organic material being passed through the chromatographic column.

Because of the pores and fissures that can be present on the metal oxide particle, particularly those having high surface area, often all the surface hydroxyl units are not reacted because of the inability of the longer chain phosphorous-containing organic material reaching or diffusing into the pores and fissures. Thus, to inert or block remaining reactive sites, the $R'PO(OH)_2$ phosphonic acid containing the short-chain monomer or oligomer, e.g., 1-4 carbon atoms per chain, is used in a second treatment or reaction. In this way, all of the reactive sites are capped or blocked. That is, for capping off the reactive sites, short-chain monomers can be used. For example, an alumina treated with a high molecular weight phosphonic acid corresponding to the $RPO(OH)_2$ formula, e.g. an n-heptadecylphosphonic acid, may be further treated with a low molecular weight phosphonic acid, e.g., methylphosphonic acid, to treat any remaining unreacted alumina surface areas.

It should be noted in this regard that it is the long chain hydrocarbon R groups, not the short chain R' groups, which principally interact with the respective organic materials being passed through the column to provide the independent peaks identifying the particular organic material passing through the column at various rates of elution. The principal function of the shorter chain R' groups is to react with any remaining hydroxyl groups on the aluminum oxide/hydroxide support material so that the non-polar group or groups of the organic material passing through the column will interact with the non-polar packing material (rather than the polarized end of the organic molecule passing through the column interacting with exposed hydroxyl groups on the support material) so that a true reverse phase profile through the chromatographic column is maintained. Thus, the shorter chain phosphonic acid must be reacted with the support surface in an amount sufficient to bond to all reactive hydroxyl sites remaining on the support surface after the initial treatment with the one or more longer chain phosphonic acids.

After formation of the packing material, the material may be treated in an organic solvent or a basic or acidic solution, or a combination thereof, e.g., a $NaHCO_3/Na_2CO_3$ washing solution having a pH of about 10, to remove any weakly adsorbed molecules on the particles. This ensures that all of the molecules remaining are bonded to the hydroxyl groups on the metal oxide/hydroxide surface and not to one another, thus assuring formation of the desired monomolecular layer stable over a wide range of pH.

The resulting reverse phase chromatographic packing material is stable at pH ranges of from 1-14 and has good stability in the range of 2-12 while still maintaining high efficiency of separation. Typically, a reverse phase packing based on approximately 10 micron diameter alumina particles with an initial surface area of 150 $m^2$/gram will result in a chromatographic support with an N number of 18,000 to as high as over 25,000 per meter (N being the number of theoretical plates).

The following examples will serve to further illustrate the practice of the invention.

Example 1

High purity bayerite and gamma alumina were used as supports. The nitrogen BET surface area was 19 and 65 $m^2$/g for bayerite and gamma, respectively.

Both the bayerite and gamma aluminas, having an average particle size of about 2 $\mu$m, were dried in a 110° C. drying oven and 10 gram samples were weighed into a number of glass sample vials.

To each of four vials containing 10 gram samples of gamma alumina were added, respectively, 100 ml of 0.1, 0.01, 0.001, and 0.0001 molar solutions of phenylphosphonic acid formed by diluting a 0.1 molar phenylphosphonic acid solution with deionized and distilled water. Molar concentrations of 0.01, 0.001 and 0.0001 gave a monolayer but cover less than all of the surface area available on the particles. A molar concentration of 0.1 was sufficient to provide a monolayer on most of the surface area of the particles. Higher than 0.1 molar would have resulted in multilayering, which is undesirable. To a fifth 10 gram sample of gamma alumina was added 100 ml of deionized and distilled water. Five more samples were similarly

prepared using 10 gram bayerite samples instead of gamma alumina. The ten samples were shaken and then allowed to age for 24 hours. The contents of the sample containers were then vacuum filtered through Whatman 42 filter paper. The surface modified alumina samples were placed in clean vials and dried in a 110° C. drying oven. The phosphorus content of each of the samples was determined by direct current plasma spectroscopy.

The results are tabulated in Table 1 and plotted in the graph of Figure 1. It can be seen that there is a significant increase in the amount of phosphorus present on the surface of the bayerite and gamma alumina samples aged in the 0.1 molar solution of phenyl-phosphonic acid compared to less concentrated amounts. Higher phosphorus content of gamma alumina compared to bayerite is because of its higher surface area.

Table 1

| Sample Number | Alumina Form | Acid Conc. (M) Molar | Adsorbed Phosphorus Wt. % |
|---|---|---|---|
| 1 | bayerite | 0.0000 | 0.00 |
| 2 | bayerite | 0.0001 | 0.01 |
| 3 | bayerite | 0.001 | 0.01 |
| 4 | bayerite | 0.01 | 0.06 |
| 5 | bayerite | 0.1 | 0.61 |
| 6 | gamma | 0.0000 | 0.00 |
| 7 | gamma | 0.0001 | 0.01 |
| 8 | gamma | 0.001 | 0.04 |
| 9 | gamma | 0.01 | 0.29 |

## Example 2

Another group of 10 gram samples of gamma and bayerite aluminas were used and to each sample was added 100 ml of 0.1 molar phenylphosphonic acid. Each sample vial was covered and shaken and then allowed to age for a predetermined time period followed by, filtration, drying, and measurement similar to that previously described in Example 1 to determine the phosphorus content on the alumina sample with respect to contact time between the respective alumina samples and the phenylphosphonic acid. These results are tabulated in Table 2 and illustrated in the graph of Figure 2.

The filtrate for the alumina samples aged for various time periods was also analyzed for phosphorus content. The concentration of phosphorus in the filtrate of the bayerite and gamma alumina samples aged for various amounts of time is plotted in Figure 3. The pH change of the respective solution for the gamma and bayerite samples aged for 24 hours was also monitored and the change in pH with respect to time was plotted in Figure 6 to illustrate yet another way of monitoring the amount of chemically adsorbed phenylphosphonic acid on the aluminas. It is seen that the solution containing the gamma alumina sample shows a rapid rise in pH between 0 and 30 minutes and then a slow increase until 120 minutes where it begins to decrease slightly. The pH of the solution containing the bayerite alumina sample shows linear increase from 0 to approximately 150 minutes and then decreases slightly. It should be noted that aluminas other than bayerite and gamma alumina, e.g., gibbsite, boehmite, eta, chi, rho, delta, kappa and alpha aluminas, may be used as supports.

Table 2

| Sample Number | Alumina Type | Time in Minutes | Adsorbed Phosphorus Wt. % |
|---|---|---|---|
| 1 | bayerite | 2 | 0.12 |
| 2 | bayerite | 4 | 0.11 |
| 3 | bayerite | 8 | 0.12 |
| 4 | bayerite | 16 | 0.12 |
| 5 | bayerite | 32 | 0.11 |
| 6 | bayerite | 64 | 0.13 |
| 7 | bayerite | 128 | 0.12 |
| 8 | bayerite | 256 | 0.38 |
| 9 | bayerite | 1440 | 1.31 |
| 10 | gamma | 2 | 0.72 |
| 11 | gamma | 4 | 0.62 |
| 12 | gamma | 8 | 0.65 |
| 13 | gamma | 16 | 0.67 |
| 14 | gamma | 32 | 0.62 |
| 15 | gamma | 64 | 0.63 |
| 16 | gamma | 128 | 0.65 |
| 17 | gamma | 256 | 0.80 |
| 18 | gamma | 1440 | 1.56 |

## Example 3

To further illustrate the practice of the invention, 3 grams each of the filtered and dried gamma alumina samples from Example 1, respectively contacted with 0.1, 0.01 and 0.0001 molar phenylphosphonic acid, were washed and filtered 3 times with 30 ml of distilled, deionized water. Filtered and dried 3 gram gamma alumina samples from Example 2, which had, respectively, been contacted with 0.1 molar phenylphosphonic acid for 8, 64, and 1440 minutes were similarly washed. All the washed samples were then placed into clean vials and dried in a 110 ° C. drying oven. The gamma alumina samples contacted with the 0.1 molar concentration phenylphosphonic acid were not wettable. They were also not affected by the washing.

The results are respectively illustrated in Figures 4 and 5 in which the results from the washed samples are plotted in dotted lines superimposed on the respective solid line gamma curves for unwashed samples corresponding to the gamma curves respectively shown in Figures 1 and 2. It will be noted that the amount of phosphorus remaining on the treated alumina after washing is fairly comparable to the unwashed samples.

## Example 4

To illustrate the multiple treatment of alumina with more than one type of phosphonic or phosphinic acid, a solution of 0.1 molar n-heptadecylphosphonic acid was prepared by dissolving 3.8454 grams in 120 ml. of isopropanol at 45 ° C. Thirty grams of activated 7-12 µm alumina was weight into this solution which was then shaken to mix and placed in an ultrasonic bath for 15 minutes. The mixture was vacuum filtered through whatman #3 filter paper. The alumina was washed with 3 volumes of isopropanol and placed in an oven at 110 ° C. to dry. The unreacted sites on the surface of the alumina were then capped with methylphosphonic acid. A solution of 0.1 molar methylphosphonic acid was prepared by dissolving 1.1524 grams of methylphosphonic acid in 120 ml. of isopropanol at 45 ° C. The dried, n-heptadecylphosphonic acid loaded alumina was added to this, shaken to mix, and placed in an ultrasonic bath for 15 minutes. The alumina was then again filtered, washed and dried at 110 ° C.

Another alumina sample was then contacted with a 0.3 molar solution of n-heptadecylphosphonic acid dissolved in isopropanol under the same conditions and then capped as above with a 0.1 molar solution of methylphosphonic acid.

Both samples were analyzed on an IBM Instruments IR-98 Fourier Transform Infrared Spectrometer with 128 scans per spectrum at 4 cm-1 resolution. The spectra were plotted using a KBr spectrum as reference. The bands chosen for the n-heptadecylphosphonic acid calibration curves were the 2928 cm-1 asymmetric

stretching band and the 1470 cm-1 bending band. The band at 1470 cm-1 is selected as the analytical wavelength because the value for its standard deviation is ten times less than the value for the band at 2928 cm-1. At this wavelength, the respective weight percent of n-heptadecylphosphonic acid loaded by treating the alumina with the 0.1 molar and 0.3 molar solutions was 6.88 and 24.85 wt.%, respectively.

Example 5

A reverse phase chromatographic packing material was prepared in accordance with the invention by reacting an aluminum oxide/hydroxide support material with a 0.1 molar long chain phosphonic acid at a temperature of 120° C. for 1 hour. The support material was then reacted at 120° C. with a 0.1 molar methyl phosphonic acid for 1 hour to cap off any remaining reactive hydroxyl sites on the support material. The support material comprised an aluminum oxide/hydroxide having a particle size range of about 7-12 μm, a pore diameter range of from about 2 to 10 nm, and a pore volume of from about 0.2 to 1.0 milliliters/gram. The long chain phosphonic acid comprised octadecyl acid and the weight ratio of the two phosphonic acids was 7 wt.% octadecyl acid and 4 wt.% methyl phosphonic acid with a weight ratio of total phosphonic acids to aluminum oxide/hydroxide support of 11 wt.%. About 5 grams of this reverse phase chromatographic packing material was packed into a 4.6 millimeter I.D. column to a height of 25 cm to provide a total volume of approximately 4 to 5 ml.

A test mixture consisting of 0.2 grams of p-nitroaniline, 0.2 grams of methyl benzoate, 0.2 grams of phenetole and 0.2 grams of o-xylene dissolved in 1000 ml of methanol was prepared. The test mixture was injected at various times onto the column, and the components of the mixture were eluted from the column with a solvent system of 40% water, 30% methanol and 30% acetonitrile at a flow rate of 1.25 ml/min. The pH of the water portion of the solvent system was raised to pH 10 with a sodium carbonate/sodium hydroxide buffer and after running for 2 hours, the efficiency was N = 19,000 showing the packing material retained its stability and high efficiency for an extended period of usage. The same solvent system, with the pH readjusted to 12 through the addition of additional sodium hydroxide, was passed through the same column for an additional 48 hours, and the efficiency measured at N = 25,000 which further indicated the high efficiency and good stability of the material at high pH. The chromatographic measurements showing the sharp peaks for the four materials respectively at 2 hours and 48 hours at pH 10 and over 48 hours at pH of 12 are shown respectively in Figures 9A-9C.

Thus the above illustrates that the invention provides an improved reverse phase chromatographic packing material which exhibits good stability over a wide pH range with good separation efficiency.

The above examples also illustrate that the invention provides a method for forming a reactive material capable of withstanding pH ranges of 1-14 and nonwettable in an aqueous media by reacting metal oxide/hydroxide particles with an organic phosphorous-containing compound such as a phosphonic or phosphinic acid at a concentration of about 0.0001 to 0.1 molar until a sufficient amount of the phosphorous-containing compound has reacted with the surface of the metal oxide/hydroxide particle to form the desired monomolecular layer thereon.

Example 6

The alumina used was Woelm N 3-6, a 3-6 micrometer particle size activated alumina with a nitrogen B.E.T. surface area of 148 $m^2$/gram. X-ray diffraction identified this as being mostly chi alumina with a trace of Bayerite.

Two twenty gram samples of this alumina were treated, one with monododecyl phosphate [$(C_{12}H_{25}O)$-$PO(OH)_2$], the other with didodecyl phosphate [$(C_{12}H_{25}O)_2PO(OH)$]. Each sample was mixed with 92 ml. of a 0.14 M toluene solution of the respective reagents for two hours at 50° C. Each reaction mixture was then vacuum filtered to separate the solids. The solids from each mixture were then washed with three displacements of fresh toluene to remove any unreacted orgonophosphonic acid. The samples were then dried under vacuum at 60° C. for more than 8 hours. The samples were then analyzed for carbon (by combustion) and phosphorus (by direct current plasma spectroscopy on a nitric acid solution of the material). The results are summarized in the following table.

| | Experiment No. 22661-48A | Experiment No. 22661-48B |
|---|---|---|
| Reagent | $(C_{12}H_{25}O)PO(OH)_2$ | $(C_{12}H_{25}O)_2PO(OH)$ |
| Initial $Al_2O_3$ wt, gm | 20.01 | 20.02 |
| Treated $Al_2O_3$ wt, gm | 22.98 | 22.63 |
| Product: | | |
| wt.% P | 1.56 | 0.87 |
| wt.% PC | 7.72 | 8.38 |
| Mole Ratio, C/P | 12.8 | 24.8 |

Example 7

The products of Example 6 were then treated with a mixture of monomethyl phosphoric acid $[(CH_3O)PO(OH)_2]$ and dimethyl phosphoric acid $[(CH_3O)_2PO(OH)]$ to react the alumina surface which was not accessible to the mono or didodecyl phosphoric acid. The mixture of methyl phosphates was dissolved in de-ionized water. The materials from Example 6 were added to 62 ml. of an approximately 0.62M solution of the methyl phosphate mixture at 40° C. The reaction was continued for two hours after the materials from Example 6 were wet by the solution. (They were wet with difficulty by the water solution, a qualitative indication that the particle surfaces were well covered with hydrocarbon groups.) The product solids were then vacuum filtered and washed with three displacements of de-ionized water. The material was dried under vacuum at 60° C. for more than eight hours.

The composition of the products are shown here.

| | Experiment No. 22661-48A-1 | Experiment No. 22661-48B-1 |
|---|---|---|
| Origin of Starting Solids | 22661-48A | 22661-48B |
| Starting Weight (gm) | 20.06 | 20.03 |
| Wt of Product Recovered (gm) | 19.80 | 20.27 |
| Product | | |
| wt.% P | 1.70 | 1.66 |
| wt.% C | 7.57 | 8.58 |

The proportion of phosphorus increased on both alumina samples, which is consistent with increasing the proportion of surface area covered with organophosphoric acids. Note that the increase in phosphorus content was much larger for the material treated with didodecyl phosphoric acid (2261-48B to 2261-48B-1).

Portions of each treated alumina (2261-48A-1 and 2261-48B-1) were used to pack columns for liquid chromatography. Each column was able to separate the mixture of p-nitroanaline, methyl benzoate, phentetole and o-xylene with 30 vol.% acetonitride, 30 vol.% methanol and 40 vol.% water. The column packed with material made from the monododecyl phosphate (22661-48A-1) gave 37,000 to 38,000 theoretical plates, while the column packed with material made from the didodecyl phosphate (22661-48B-1) gave from 31,000 to 32,000 theoretical plates.

The column packed with the monododecyl phosphate treated alumina (22661-48A-1) also showed superior resistance to strongly caustic solutions (water replaced by pH = 10.0 carbonate buffer). It was uncharged after sixteen hours, while the column packed with alumina treated with didodecyl phosphate (2261-48B-1) failed completely before sixteen hours of operation had been achieved.

Thus, it is shown further that the invention provides a method for forming a reactive material capable of withstanding pH ranges of 2 to 11 and nonwettable in an aqueous media by reacting metal oxide/hydroxide particles with an phosphoric acid monoester or phosphoric acid diester at a concentration of about 0.0001 to 0.5 molar until a sufficient amount of the phosphorous-containing compound has reacted with the surface of the metal oxide/hydroxide particle to form the desired monomolecular layer thereon.

## Claims

1. An active material comprising metal oxide/hydroxide particles having chemically bonded to reactive sites on a surface thereof, a monomolecular layer of a phosphorous-containing organic material comprised of:
   (i) phosphonic acid having the formula $RPO(OH)_2$;
   (ii) phosphonic acid having the formula RR'PO(OH);
   (iii) phosphoric acid monoester having a formula $(RO)PO(OH)_2$; or
   (iv) phosphoric acid diester having a formula (RO)(R'O)PO(OH);
   where R comprises a carbon-containing group and R' comprises a carbon-containing group, said bond being formed by reaction of said phosphorous-containing group with said metal oxide/hydroxide surface, said carbon-containing group being oriented away from said metal oxide/hydroxide surface.

2. The active material of claim 1, wherein said phosphorous-containing organic material is a phosphonic acid having the formula $RPO(OH)_2$ or a phosphinic acid having the formula RR'PO(OH) where R comprises a carbon-containing group and R' comprises hydrogen or a carbon-containing group.

3. The active material of claim 1, wherein said phosphorous-containing organic material is a phosphoric acid having the formula $(RO)PO(OH)_2$ or a phosphoric acid having the formula (RO) (R'O)PO(OH) where R comprises a carbon-containing group and R' comprises a carbon-containing group.

4. The active material of any of claims 1 to 3, wherein said monomolecular layer of phosphorous-containing organic material is chemically bonded to at least 25% of the reactive sites on said metal oxide/hydroxide surface.

5. The active material of any of the preceding claims, wherein said metal oxide/hydroxide comprises particles having one or more of the following properties:
   (a) a particle size range of from 50 Angstroms up to 12 millimeters;
   (b) the particles comprise porous particles having an average pore size of from about 1 to about 200 microns in diameter;
   (c) the particles comprise porous particles which have a pore volume of from about 0.1 to about 1.5 ml/gram; and/or
   (d) the particles comprise porous particles which have a surface area of from about 0.10 to about 1000 $m^2$/gram;
   (e) the thickness of said monomolecular layer of phosphorous-containing organic material chemically bonded to said metal oxide/hydroxide particles is in the range of 10 to 5,000 Angstroms, or is in the range of 20 to 500 Angstroms.

6. The active material of any of the preceding claims, wherein said metal oxide/hydroxide particles:
   (1) comprise an oxide/hydroxide of an element capable of forming an oxide/hydroxide from group IB, group IIA, group IIB, group IIIA, IVA, VA, group IIIB, group IVB, group VB, group VIB, group VIIB, or group VIII metals; lanthanide series; silicon, thorium, boron, uranium, selenium, arsenic or tellurium;
   (2) comprise an oxide/hydroxide of a metal consisting of aluminum, magnesium, titanium, zirconium, iron, silicon, chromium, zinc, vanadium, or combinations of these metals; or
   (3) consist of alumina, iron oxide, silica, zeolitic materials, zirconia, zinc oxide, magnesia, apatites, or hydrotalcites, said alumina being preferred.

7. The active material of claim 6, wherein said alumina
   (a) comprises activated alumina having a surface area in the range of 0.1 to 600 $m^2$/g; and/or
   (b) has a particle size in the range of 50 Angstroms to 12 millimeters.

8. The active material of any of claims 2 to 7, wherein in said formulas R and R' are in accordance with one or more of following definitions:
   (a) said R group of said phosphorous-containing organic molecule contains at least 5 carbon atoms;
   (b) either said R group or said R' group may comprise an organic radical consisting of long and short chain aliphatic hydrocarbons, aromatic hydrocarbons, carboxylic acids, aldehydes, ketones, amines, amides, thioamides, imides, lactams, anilines, pyridines, piperidines, anhydrides, carbohydrates, esters, lactones, ethers, alkenes, alkynes, alcohols, nitriles, oximes, organosilicones, sulfur containing organic compounds, ureas, thioureas, perfluoro, perchloro, perbromo organic molecules or combinations of these groups;
   (c) either said R group or said R' group may have a functional group attached to a portion of sold molecule spiced from said phosphorous-containing group on said molecule consisting of a carboxyl group, e.g., a carboxymethyl group, a glucose group, a monoclonal antibody, a cyano group, a cyanate group, isocyanate group and thiocyanate group, a phenyl group, a diphenyl group, a tertiary butyl group, a sulfonic group, a benzyl sulfonic group, a protein group such as protein A (staphytococcal protein A), pharmaceutical compounds, yeasts, microbes, whole cells, an enzyme group, a dye group, a chelated metal group, a tag molecule, a halogen group, nitrate group, phosphate group, phosphinate group, phosphinite group, phosphonate group, quaternary ammonium salt group or combinations of these groups;
   (d) either said R group or said R' group may have a cation exchange functional group attached to a portion of said molecule spaced from said phosphorous-containing group on said molecule and selected from the class consisting of $-HSO_3$, $-N(CH_3)_3Cl$, -COONa, $-NH_2$ and -CN.

9. The active material of any of the preceding claims, wherein said monomolecular layer of organic material having a phosphorous-containing group is substantially free of hydroxyl groups after chemically bonding to said metal oxide/hydroxide particles.

10. A chromatographic packing material comprising a monomolecular layer of one or more phosphonic acids bonded to a particulate metal oxide/hydroxide support material, preferably wherein said metal oxide/hydroxide comprises aluminum oxide/hydroxide.

11. The chromatographic pecking material of claim 10, wherein said particulate metal oxide/hydroxide support material has one or more of the following properties:
   (a) it has a particle size range of from about 0.5 to about 300 microns;
   (b) it has a particle size range of from about 1 to about 80 microns;
   (c) it has a pore diameter range of from about 20 to about 10,000 Angstroms;
   (d) it has a pore diameter range of from about 40 to about 1000 Angstroms;
   (e) it has a pore volume of from about 0.1 to about 2 milliliters/gram;
   (f) it has a pore volume of from about 0.3 to about 1.5 milliliters/gram.

12. The chromatographic packing material of claim 10 or 11, wherein said metal oxide/hydroxide particle comprises: (1) an oxide/hydroxide of an element capable of forming an oxide/hydroxide consisting of group IB, group IIA, group IIB, group IIIA, group IIIB, group IVA, group IVB, group VA, group VB, group VIB, group VIIB, or group VIII metals; lanthanide series; silicon, thorium, boron, uranium, selenium, arsenic or tellurium; or (2) an oxide/hydroxide of a metal consisting of aluminum, magnesium, titanium, zirconium, iron, silicon, chromium, zinc, vanadium, or combinations of these metals.

13. A chromatographic packing material of any of claims 10 to 12, wherein said monomolecular layer of said one or more phosphonic acid bonded to said particulate support material comprises a mixture of:
   (a) from about 2 to about 97% of one or more phosphonic acids having the formula $RPO(OH)_2$ wherein R is a 5-30 carbon saturated or unsaturated aliphatic hydrocarbon or an aromatic hydrocarbon; and
   (b) from about 5 to about 75% of one or more phosphonic acids having the formula $R'PO(OH)_2$ wherein R' is a 1-4 carbon saturated or unsaturated aliphatic hydrocarbon.

14. A chromatographic packing material of any of claims 10 to 13, wherein said phosphonic acid having the formula $R'PO(OH)_2$ consists essentially of methyl phosphonic acid which is reacted with hydroxyl groups on said support material after reaction between said support material and said one or more phosphonic acids having 5-30 carbons thereon in an amount sufficient to react with any remaining

reactive hydroxyl sites on said support material.

**15.** A process for chemically bonding a monomolecular layer of phosphorous-containing organic material to metal oxide/hydroxide particles to form an active material which comprises:
(a) providing a liquid containing an organic material therein having 1-2 phosphorous-containing groups thereon consisting of:
(i) phosphonic acid having the formula $RPO(OH)_2$;
(ii) phosphinic acid having the formula RR'PO(OH);
(iii) phosphoric acid monoester having a formula $(RO)PO(OH)_2$; or
(iv) phosphoric acid diestor having a formula (RO)(R'O)PO(OH);
where R comprises a carbon-containing group and R' comprises a carbon-containing group; and
(b) contacting the metal oxide/hydroxide particles with said liquid to chemically bond said phosphorous-containing material to all of the exposed hydroxyl groups on the surface of said metal oxide/hydroxide particles to form a monolayer of said organic material thereon forming said active material.

**16.** The process of claim 15, wherein the steps are conducted under one or more of the following conditions:
(a) said step of providing a liquid containing an organic material therein having 1-2 phosphorous-containing groups thereon further comprises maintaining a concentration of said phosphorous-containing organic material in said liquid of at least about 0.1 molar;
(b) said stop of contacting said metal oxide/hydroxide particles with said liquid containing said phosphorous-containing organic material further comprises maintaining said contact for from about 0.1 to about 20 hours;
(c) said step of contacting said metal oxide/hydroxide particles with said liquid containing said phosphorous-containing organic material further comprises maintaining said contact for from about 0.5 to about 4 hours;
(d) said step of contacting said metal oxide/hydroxide particles with said liquid containing said phosphorous-containing organic material further comprises maintaining the temperature of the reactants at about 5-150 ° C. during said contacting step.

**17.** The process of claim 15 or 16, wherein said metal oxide/hydroxide particles and said phosphorous-containing material are as defined in any of claims 5 to 9.

**18.** A method of making an active material for use as a chromatographic packing material characterized by good pH stability and high efficiency, comprising:
(a) reacting with a particulate metal oxide/hydroxide support material, having a particle size range of from about 0.5 to about 300 microns, one or more phosphonic acids having the formula $RPO(OH)_2$ wherein R is a 5-30 carbon saturated or unsaturated aliphatic hydrocarbon or an aromatic hydrocarbon to form a monomolecular layer of said one or more phosphonic acids on the surface of said particulate support material; and
(b) further reacting said particulate support material with one or more phosphonic acids having the formula $R'PO(OH)_2$ wherein R' is a 1-4 carbon saturated or unsaturated aliphatic hydrocarbon in a quantity sufficient to form chemical bonds with all remaining reactive hydroxyl sites on said support material.

**19.** The method of claim 18, which includes the further step of providing a particulate metal oxide/hydroxide support material having a pore diameter range of from about 20 to about 100,000 Angstroms, a pore diameter range of from about 40 to about 1000 Angstroms, and a pore volume of from about 0.1 to about 2 milliliters/gram.

**20.** The method of claim 18 or 19, wherein the steps are conducted under one or more of the following conditions:
(a) said step of further reacting said particulate support material with one or more phosphonic acids having the formula $R'PO(OH)_2$ comprises further reacting said particulate material with methylphosphonic acid;
(b) the concentration of said phosphonic acids is from about 0.0001 to about 0.1 molar;

(c) in each of said steps, said phosphonic acids are reacted with said support material in a non-aqueous media for a period of from about 1 to not more than about 20 hours at a temperature of from about 5 ° C. up to about 200 ° C. to form said monomolecular layer on said metal oxide/hydroxide support material;
(d) in each of said steps, said phosphonic acids are reacted with said support material for a period of from about 1 to not more than about 20 hours in an aqueous media at a temperature of from about 25 ° C. up to about 90 ° C. to form said monomolecular layer on said metal oxide/hydroxide support material.

## Patentansprüche

1. Aktives Material umfassend Metalloxid/Hydroxid-Teilchen, die an reaktionsfähigen Stellen auf ihrer Oberfläche chemisch verbunden sind mit einer monomolekularen Schicht eines phosphorhaltigen organischen Materials, bestehend aus:
(i) Phosphonsäure mit der Formel $RPO(OH)_2$;
(ii) Phosphinsäure mit der Formel RR'PO(OH);
(iii) Phosphorsäuremonoester mit der Formel $(RO)PO(OH)_2$; oder
(iv) Phosphorsäurediester mit der Formel (RO)(R'O)PO(OH);
wobei R eine kohlenstoffhaltige Gruppe umfaßt und R' eine Kohlenstoffhaltige Gruppe umfaßt, und die Bindung gebildet wird durch Umsetzen der phosphorhaltigen Gruppe mit der Metalloxid/Hydroxid-Oberfläche, wobei die Kohlenstoffhaltige Gruppe von der Metalloxid/Hydroxidoberfläche weggerichtet ist.

2. Aktives Material nach Anspruch 1, dadurch gekennzeichnet, daß das phosphorhaltige organische Material eine Phosphonsäure ist mit der Formel $RPO(OH)_2$ oder eine Phosphinsäure mit der Formel RR'PO(OH), wobei R eine kohlenstoffhaltige Gruppe umfaßt und R' Wasserstoff oder eine kohlenstoffhaltige Gruppe umfaßt.

3. Aktives Material nach Anspruch 1, dadurch gekennzeichnet, daß das phosphorhaltige organische Material eine Phosphorsäure ist mit der Formel (RO)PO(OH)2 oder eine Phosphorsäure mit der Formel (RO)(R'O)PO(OH), wobei R eine kohlenstoffhaltige Gruppe umfaßt und R' eine kohlenstoffhaltige Gruppe umfaßt.

4. Aktives Material nach einem der Ansprüche 1 bis 3, dadurch gekennzeichnet, daß die monomolekulare Schicht aus phosphorhaltigem organischem Material chemisch gebunden ist an mindestens 25% der reaktionsfähigen Stellen auf der Metalloxid/Hydroxid-Oberfläche.

5. Aktives Material nach einem der vorhergehenden Ansprüche, dadurch gekennzeichnet, daß das Metalloxid/Hydroxid Teilchen umfaßt, die eine oder mehrere der folgenden Eigenschaften besitzen:
(a) eine Teilchengröße im Bereich von 50 Angström bis 12 mm;
(b) die Teilchen umfassen poröse Teilchen mit einer durchschnittlichen Porengröße von etwa 1 bis etwa 200 µm im Durchmesser;
(c) die Teilchen umfassen poröse Teilchen mit einem Porenvolumen von etwa 0,1 bis etwa 1,5 ml/g; und/oder
(d) die Teilchen umfassen poröse Teilchen mit einer Oberfläche von etwa 0,10 bis etwa 1000 $m^2/g$;
(e) die Dicke der monomolekularen Schicht aus phosphorhaltigem organischem Material, welches chemisch verbunden ist mit den Metalloxid/Hydroxid-Teilchen, liegt im Bereich von 10 bis 5.000 Angström, oder im Bereich von 20 bis 500 Angström.

6. Aktives Material nach einem der vorhergehenden Ansprüche, dadurch gekennzeichnet, daß die Metalloxid/Hydroxid-Teilchen:
(1) ein Oxid/Hydroxid eines Elementes umfassen, das in der Lage ist, ein Oxid/Hydroxid zu bilden, und ausgewählt ist aus Metallen der Gruppe IB, Gruppe IIA, Gruppe IIB, Gruppe IIIA, IVA, VA, Gruppe IIIB, Gruppe IVB, Gruppe VB, Gruppe VIB, Gruppe VIIB oder Gruppe VIII; aus der Lanthanreihe; aus Silicium, Thorium, Bor, Uran, Selen, Arsen oder Tellur;
(2) ein Oxid/Hydroxid eines Metalls enthalten, welches aus Aluminium, Magnesium, Titan, Zirconium, Eisen, Silicium, Chrom, Zink, Vanadium, oder aus Kombinationen dieser Metalle besteht; oder

(3) aus Aluminiumoxid, Eisenoxid, Siliciumdioxid, zeolithischen Materialien, Zirconiumdioxid, Zinkoxid, Magnesiumoxid, Apatiten oder Hydrotalkiten bestehen, wobei das Aluminiumoxid bevorzugt ist.

**7.** Aktives Material nach Anspruch 6, dadurch gekennzeichnet, daß das Aluminiumoxid
(a) aktiviertes Aluminiumoxid umfaßt mit einer Oberfläche im Bereich von 0,1 bis 600 $m^2/g$; und/oder
(b) eine Teilchengröße im Bereich von 50 Angström bis 12 mm besitzt.

**8.** Aktives Material nach einem der Ansprüche 2 bis 7, dadurch gekennzeichnet, daß in den Formeln R und R' einer oder mehreren der folgenden Definitionen entsprechen:
(a) die R-Gruppe des phosphorhaltigen organischen Moleküls enthält mindestens 5 Kohlenstoffatome;
(b) entweder die R-Gruppe oder die R'-Gruppe kann einen organischen Rest enthalten, bestehend aus lang- und kurzkettigen aliphatischen Kohlenwasserstoffen, aromatischen Kohlenwasserstoffen, Carbonsäuren, Aldehyden, Ketonen, Aminen, Amiden, Thioamiden, Imiden, Lactamen, Anilinen, Pyridinen, Piperidinen, Anydriden, Kohlenhydraten, Estern, Lactonen, Ethern, Alkenen, Alkinen, Alkoholen, Nitrilen, Oximen, siliciumorganischen Verbindungen, schwefelhaltigen organischen Verbindungen, Harnstoffen, Thioharnstoffen, organischen Perfluor-, Perchlor-, Perbrom-Molekülen oder Kombinationen dieser Gruppen;
(c) entweder die R-Gruppe oder die R'-Gruppe kann eine funktionelle Gruppe besitzen, die mit einem von der phosphorhaltigen Gruppe auf dem Molekül entfernten Teil des Moleküls verbunden ist, bestehend aus einer Carboxylgruppe, z.B. einer Carboxymethylgruppe, einer Glucosegruppe, einem monoklonalen Antikörper, einer Cyangruppe, einer Cyanatgruppe, Isocyanatgruppe und Thiocyanatgruppe, einer Phenylgruppe, einer Diphenylgruppe, einer tertiären Butylgruppe, einer Sulfongruppe, einer Benzylsulfongruppe, einer Proteingruppe wie zum Beispiel Protein A (Staphylokokkenprotein A), pharmazeutischen Verbindungen, Hefen, Mikroben, ganzen Zellen, einer Enzymgruppe, einer Farbstoffgruppe, einer chelatgebundenen Metallgruppe, einem Markierungsmolekül, einer Halogengruppe, Nitratgruppe, Phosphatgruppe, Phosphinatgruppe, Phosphinitgruppe, Phosphonatgruppe, quaternären Ammoniumsalzgruppe oder Kombinationen dieser Gruppen;
(d) entweder die R-Gruppe oder die R'-Gruppe kann eine funktionelle Kationenaustauschgruppe besitzen, die mit einem von der phosphorhaltigen Gruppe auf dem Molekül entfernten Teil des Moleküls verbunden ist und ausgewählt ist aus der Klasse umfassend $-HSO_3$, $-N(CH_3)_3Cl$, -COONa, $-NH_2$ und -CN.

**9.** Aktives Material nach einem der vorhergehenden Ansprüche, dadurch gekennzeichnet, daß die monomolekulare Schicht aus organischem Material mit einer phosphorhaltigen Gruppe im wesentlichen frei ist von Hydroxylgruppen, nachdem sie sich mit den Metalloxid/Hydroxid-Teilchen chemisch verbunden hat.

**10.** Chromatographisches Füllmaterial, umfassend eine monomolekulare Schicht aus ein oder mehr Phosphonsäuren, die mit einem dispersen Metalloxid/Hydroxid-Trägermaterial verbunden sind, dadurch gekennzeichnet, daß das Metalloxid/Hydroxid vorzugsweise Aluminiumoxid/Hydroxid umfaßt.

**11.** Chromatographisches Füllmaterial nach Anspruch 10, dadurch gekennzeichnet, daß das disperse Metalloxid/Hydroxid-Trägermaterial eine oder mehrere der folgenden Eigenschaften besitzt:
(a) es hat eine Teilchengröße im Bereich von etwa 0,5 bis etwa 300 µm;
(b) es hat eine Teilchengröße im Bereich von etwa 1 bis etwa 80 µm;
(c) es hat einen Porendurchmesser im Bereich von etwa 20 bis etwa 10.000 Angström;
(d) es hat einen Porendurchmesser im Bereich von etwa 40 bis etwa 1000 Angström;
(e) es hat ein Porenvolumen von etwa 0,1 bis etwa 2 ml/g;
(f) es hat ein Porenvolumen von etwa 0,3 bis etwa 1,5 ml/g.

**12.** Chromatographisches Füllmaterial nach Anspruch 10 oder 11, dadurch gekennzeichnet, daß das Metalloxid/Hydroxid-Teilchen umfaßt:
(1) ein Oxid/Hydroxid eines Elementes, das in der Lage ist, ein Oxid/Hydroxid zu bilden, bestehend aus Metallen der Gruppe IB, Gruppe IIA, Gruppe IIB, Gruppe IIIA, Gruppe IIIB, Gruppe IVA, Gruppe IVB, Gruppe VA, Gruppe VB, Gruppe VIB, Gruppe VIIB, oder Gruppe VIII; aus der Lanthanreihe; aus Silicium, Thorium, Bor, Uran, Selen, Arsen oder Tellur; oder

(2) ein Oxid/Hydroxid eines Metalls bestehend aus Aluminium, Magnesium, Titan, Zirconium, Eisen, Silicium, Chrom, Zink, Vanadium, oder aus Kombinationen dieser Metalle.

**13.** Chromatographisches Füllmaterial nach einem der Ansprüche 10 bis 12, dadurch gekennzeichnet, daß die monomolekulare Schicht aus der mindestens einen Phosphonsäure, die an das disperse Trägermaterial gebunden ist, besteht aus einer Mischung von:
(a) etwa 2 bis etwa 97% von einer oder mehreren Phosphonsäuren mit der Formel $RPO(OH)_2$, bei der R ein gesättigter oder ungesättigter aliphatischer Kohlenwasserstoff mit 5 bis 30 Kohlenstoffatomen oder ein aromatischer Kohlenwasserstoff ist; und
(b) etwa 5 bis etwa 75% von einer oder mehreren Phosphonsäuren mit der Formel $R'PO(OH)_2$, bei der R' gesättigter oder ungesättigter aliphatischer Kohlenwasserstoff mit 1 bis 4 Kohlenstoffatomen ist.

**14.** Chromatographisches Füllmaterial nach einem der Ansprüche 10 bis 13, dadurch gekennzeichnet, daß die Phosphonsäure mit der Formel $R'PO(OH)_2$ im wesentlichen aus Methylphosphonsäure besteht, die nach der Umsetzung zwischen dem Trägermaterial und den einen oder mehreren Phosphonsäuren mit 5 bis 30 Kohlenstoffatomen mit Hydroxylgruppen auf dem Trägermaterial umgesetzt wird in einer Menge, die ausreicht, um mit jeder verbleibenden reaktionsfähigen Hydroxylstelle auf dem Trägermaterial zu reagieren.

**15.** Verfahren zur Herstellung einer chemischen Bindung zwischen einer monomolekularen Schicht aus phosphorhaltigem organischem Material und Metalloxid/Hydroxid-Teilchen, um ein aktives Material herzustellen, umfassend die folgenden Schritte:
(a) Bereitstellen einer Flüssigkeit, die ein organisches Material enthält mit 1-2 phosphorhaltigen Gruppen daran, bestehend aus:
(i) Phosphonsäure mit der Formel $RPO(OH)_2$;
(ii) Phosphinsäure mit der Formel $RR'PO(OH)$;
(iii) Phosphorsäuremonoester mit der Formel $(RO)PO(OH)_2$; oder
(iv) Phosphorsäurediester mit der Formel $(RO)(R'O)PO(OH)$;
wobei R eine kohlenstoffhaltige Gruppe umfaßt und R' eine kohlenstoffhaltige Gruppe umfaßt; und
(b) die Metalloxid/Hydroxid-Teilchen werden mit der Flüssigkeit in Kontakt gebracht, um das phosphorhaltige Material mit sämtlichen freiliegenden Hydroxylgruppen auf der Oberfläche der Metalloxid/Hydroxid-Teilchen chemisch zu binden, um darauf eine Monolage des organischen Materials zu bilden, welches das aktive Material darstellt.

**16.** Verfahren nach Anspruch 15, dadurch gekennzeichnet, daß die Schritte unter einer oder mehreren der folgenden Bedingungen durchgeführt werden:
(a) der Schritt des Bereitstellens einer Flüssigkeit, die ein organisches Material enthält mit 1-2 phosphorhaltigen Gruppen daran, umfaßt ferner die Aufrechterhaltung einer Konzentration des phosphorhaltigen organischen Materials in der Flüssigkeit von mindestens etwa 0,1 mol/l;
(b) der Schritt, bei dem die Metalloxid/Hydroxid-Teilchen mit der das phosphorhaltige organische Material enthaltenden Flüssigkeit in Kontakt gebracht werden, umfaßt ferner die Aufrechterhaltung des Kontakts für eine Dauer von etwa 0,1 bis etwa 20 Stunden;
(c) der Schritt, bei dem die Metalloxid/Hydroxid-Teilchen mit der das phosphorhaltige organische Material enthaltenden Flüssigkeit in Kontakt gebracht werden, umfaßt ferner die Aufrechterhaltung des Kontakts für eine Dauer von etwa 0,5 bis etwa 4 Stunden;
(d) der Schritt, bei dem die Metalloxid/Hydroxid-Teilchen mit der das phosphorhaltige organische Material enthaltenden Flüssigkeit in Kontakt gebracht werden, umfaßt ferner die Aufrechterhaltung der Temperatur der Reaktionspartner auf etwa 5-150 °C während des Kontakts.

**17.** Verfahren nach Anspruch 15 oder 16, dadurch gekennzeichnet, daß die Metalloxid/Hydroxid-Teilchen und das phosphorhaltige Material der Definition gemäß den Ansprüchen 5 bis 9 entsprechen.

**18.** Verfahren zur Herstellung eines aktiven Materials zur Verwendung als chromatographisches Füllmaterial, gekennzeichnet durch eine gute pH-Stabilität und einen hohen Wirkungsgrad, umfassend die folgenden Schritte:
(a) Umsetzen eines dispersen Metalloxid/Hydroxid-Trägermaterials mit einer Teilchengröße im Bereich von etwa 0,5 bis etwa 300 $\mu m$, mit ein oder mehr Phosphonsäuren der Formel $RPO(OH)_2$,

bei der R ein gesättigter oder ungesättigter aliphatischer Kohlenwasserstoff mit 5-30 Kohlenstoffatomen oder ein aromatischer Kohlenwasserstoff ist, um eine monomolekulare Schicht der einen oder mehreren Phosphonsäuren auf der Oberfläche des dispersen Trägermaterials auszubilden; und

(b) ferner Umsetzen des dispersen Trägermaterials mit ein oder mehr Phosphonsäuren der Formel $R'PO(OH)_2$, bei der R' ein gesättigter oder ungesättigter aliphatischer Kohlenwasserstoff mit 1-4 Kohlenstoffatomen ist, in einer Menge, die ausreicht, um chemische Bindungen mit allen verbleibenden reaktionsfähigen Hydroxylstellen auf dem Trägermaterial zu bilden.

**19.** Verfahren nach Anspruch 18, umfassend den weiteren Schritt der Bereitstellung eines dispersen Metalloxid/Hydroxid-Trägermaterials mit einem Porendurchmesser im Bereich von etwa 20 bis etwa 100.000 Angström, einem Porendurchmesser im Bereich von etwa 40 bis etwa 1000 Angström, und einem Porenvolumen im Bereich von etwa 0,1 bis etwa 2 ml/g.

**20.** Verfahren nach Anspruch 18 oder 19, dadurch gekennzeichnet, daß die Schritte durchgeführt werden unter einer oder mehreren der folgenden Bedingungen:

(a) der Schritt des weiteren Umsetzens des dispersen Trägermaterials mit ein oder mehr Phosphonsäuren der Formel $R'PO(OH)_2$ umfaßt die weitere Umsetzung des dispersen Materials mit Methylphosphonsäure;

(b) die Konzentration der Phosphonsäuren beträgt etwa 0,0001 bis etwa 0,1 mol/l;

(c) in jedem der Schritte werden die Phosphonsäuren mit dem Trägermaterial in einem nichtwäßrigen Medium für eine Dauer von etwa 1 bis nicht mehr als etwa 20 Stunden bei einer Temperatur von etwa 5°C bis etwa 200°C umgesetzt, um die monomolekulare Schicht auf dem Metalloxid/Hydroxid-Trägermaterial auszubilden;

(d) in jedem der Schritte werden die Phosphonsäuren mit dem Trägermaterial für eine Dauer von etwa 1 bis nicht mehr als etwa 20 Stunden in einem wäßrigen Medium bei einer Temperatur von etwa 25°C bis etwa 90°C umgesetzt, um die monomolekulare Schicht auf dem Metalloxid/Hydroxid-Trägermaterial auszubilden.

## Revendications

**1.** Matériau actif comprenant des particules d'oxyde/hydroxyde métallique comportant une couche monomoléculaire d'une substance organique contenant du phosphore, liée chimiquement à des sites réactifs sur une surface des particules et constituée par :

(i) un acide phosphonique de formule $RPO(OH)_2$;

(ii) un acide phosphinique de formule $RR'PO(OH)$;

(iii) un monoester d'acide phosphorique de formule $(RO)PO(OH)_2$ ; ou

(iv) un diester d'acide phosphorique de formule $(RO)(R'O)PO(OH)$; où R comprend un groupe contenant du carbone et R' comprend un groupe contenant du carbone, ladite liaison étant formée par réaction dudit groupe contenant du phosphore avec ladite surface d'oxyde/hydroxyde métallique, ledit groupe contenant du carbone étant écarté de ladite surface d'oxyde/hydroxyde métallique.

**2.** Matériau actif selon la revendication 1, dans lequel ladite substance organique contenant du phosphore est un acide phosphonique de formule $RPO(OH)_2$ ou un acide phosphinique de formule $RR'PO(OH)$ où R comprend un groupe contenant du carbone et R' comprend l'hydrogène ou un groupe contenant du carbone.

**3.** Matériau actif selon la revendication 1, dans lequel ladite substance organique contenant du phosphore est un acide phosphorique de formule $(RO)PO(OH)_2$ ou un acide phosphorique de formule $(RO)(R'O)$-$PO(OH)$ où R comprend un groupe contenant du carbone et R' comprend un groupe contenant du carbone.

**4.** Matériau actif selon l'une quelconque des revendications 1 à 3, dans lequel ladite couche monomoléculaire de substance organique contenant du phosphore est liée chimiquement à au moins 25% des sites réactifs sur ladite surface d'oxyde/hydroxyde métallique.

**5.** Matériau actif selon l'une quelconque des revendications précédentes, dans lequel ledit oxyde/hydroxyde métallique comprend des particules présentant une ou plusieurs des propriétés suivantes :

(a) une plage de tailles de particules de 50 Å à 12 mm,
(b) les particules comprennent des particules poreuses ayant une taille moyenne de pores d'environ 1 à environ 200 µm de diamètre,
(c) les particules comprennent des particules poreuses qui ont un volume poreux d'environ 0,1 à environ 1,5 ml/g, et/ou
(d) les particules comprennent des particules poreuses qui ont une aire de surface d'environ 0,10 à environ 1 000 $m^2$/g,
(e) l'épaisseur de ladite couche monomoléculaire de substance organique contenant du phosphore liée chimiquement auxdites particules d'oxyde/hydroxyde métallique est située dans la plage de 10 à 5 000 Å ou est située dans la plage de 20 à 500 Å.

**6.** Matériau actif selon l'une quelconque des revendications précédentes, dans lequel lesdites particules d'oxyde/hydroxyde métallique :
(1) comprennent un oxyde/hydroxyde d'un élément capable de former un oxyde/hydroxyde parmi les métaux du groupe IB, du groupe IIA, du groupe IIB, du groupe IIIA, IVA, VA, du groupe IIIB, du groupe IVB, du groupe VB, du groupe VIB, du groupe VIIB ou du groupe VIII, de la série des lanthanides, le silicium, le thorium, le bore, l'uranium, le sélénium, l'arsenic ou le tellure,
(2) comprennent un oxyde/hydroxyde d'un métal consistant en l'aluminium, le magnésium, le titane, le zirconium, le fer, le silicium, le chrome, le zinc, le vanadium ou en des combinaisons de ces métaux, ou
(3) consistent en alumine, oxyde de fer, silice, matériaux zéolitiques, zircone, oxyde de zinc, magnésie, apatites ou hydrotalcites, ladite alumine étant préférée.

**7.** Matériau actif selon la revendication 6, dans lequel ladite alumine :
(a) comprend de l'alumine activée ayant une aire de surface dans la plage de 0,1 à 600 $m^2$/g et/ou
(b) présente une taille de particules dans la plage de 50 Å à 12 mm.

**8.** Matériau actif selon l'une quelconque des revendications 2 à 7, dans lequel, dans lesdites formules, R et R' répondent à une ou plusieurs des définitions suivantes :
(a) ledit groupe R de ladite molécule organique contenant du phosphore contient au moins 5 atomes de carbone,
(b) l'un ou l'autre desdits groupes R et R' peut comprendre un radical organique consistant en hydrocarbures aliphatiques à longue chaîne et à courte chaîne, en hydrocarbures aromatiques, en acides carboxyliques, en aldéhydes, en cétones, en amines, en amides, en thioamides, en imides, en lactames, en anilines, en pyridines, en pipéridines, en anhydrides, en glucides, en esters, en lactones, en éthers, en alcènes, en alcynes, en alcools, en nitriles, en oximes, en organosilicones, en composés organiques contenant du soufre, en urées, en thiourées, en molécules organiques perfluorées, perchlorées, perbromées ou en combinaison de ces groupes,
(c) l'un ou l'autre desdits groupes R et R' peut comporter un groupe fonctionnel fixé à une partie de ladite molécule distante dudit groupe contenant du phosphore sur ladite molécule et consistant en un groupe carboxyle, par exemple en un groupe carboxyméthyle, en un groupe glucose, en un anticorps monoclonal, en un groupe cyano, en un groupe cyanate, en un groupe isocyanate et en un groupe thiocyanate, en un groupe phényle, en un groupe diphényle, en un groupe butyle tertiaire, en un groupe sulfonique, en un groupe benzylsulfonique, en un groupe protéique tel que la protéine A (protéine A de staphylocoque), en composés pharmaceutiques, en levures, en microbes, en cellules entières, en un groupe enzymatique, en un groupe de colorant, en un groupe métallique chélaté, en une molécule de marquage, en un groupe halogène, en un groupe nitrate, en un groupe phosphate, en un groupe phosphinate, en un groupe phosphinite, en un groupe phosphonate, en un groupe de sel d'ammonium quaternaire ou en combinaisons de ces groupes,
(d) l'un ou l'autre desdits groupes R et R' peut comporter un groupe fonctionnel d'échange de cations fixé à une partie de ladite molécule distante dudit groupe contenant du phosphore sur ladite molécule et choisi dans la classe consistant en $-HSO_3$, $-N(CH_3)_3Cl$, -COONa, $-NH_2$ et -CN.

**9.** Matériau actif selon l'une quelconque des revendications précédentes, dans lequel ladite couche monomoléculaire de substance organique comportant un groupe contenant du phosphore est sensiblement exempte de groupes hydroxyles après la liaison chimique avec lesdites particules d'oxyde/hydroxyde métallique.

**10.** Matériau de garnissage chromatographique comprenant une couche monomoléculaire d'un ou plusieurs acides phosphoniques liée à un matériau support d'oxyde/hydroxyde métallique particulaire, ledit oxyde/hydroxyde métallique comprenant de préférence de l'oxyde/hydroxyde d'aluminium.

**11.** Matériau de garnissage chromatographique selon la revendication 10, dans lequel ledit matériau support d'oxyde/hydroxyde métallique particulaire présente une ou plusieurs des propriétés suivantes :

(a) il a une gamme de tailles de particules d'environ 0,5 à environ 300 µm,
(b) il a une gamme de tailles de particules d'environ 1 à environ 80 µm,
(c) il a une gamme de diamètres de pores d'environ 20 à environ 10 000 Å,
(d) il a une gamme de diamètres de pores d'environ 40 à environ 1 000 Å,
(e) il a un volume poreux d'environ 0,1 à environ 2 ml/g,
(f) il a un volume poreux d'environ 0,3 à environ 1,5 ml/g.

**12.** Matériau de garnissage chromatographique selon la revendication 10 ou 11, dans lequel ladite particule d'oxyde/hydroxyde métallique comprend :

(1) un oxyde/hydroxyde d'un élément capable de former un oxyde/hydroxyde consistant en les métaux du groupe IB, du groupe IIA, du groupe IIB, du groupe IIIA, du groupe IIIB, du groupe IVA, du groupe IVB du groupe VA, du groupe VB, du groupe VIB, du groupe VIIB ou du groupe VIII, la série des lanthanides, le silicium, le thorium, le bore, l'uranium, le sélénium, l'arsenic ou le tellure, ou

(2) un oxyde/hydroxyde d'un métal consistant en l'aluminium, le magnésium, le titane, le zirconium, le fer, le silicium, le chrome, le zinc, le vanadium ou en des combinaisons des ces métaux.

**13.** Matériau de garnissage chromatographique selon l'une quelconque des revendications 10 à 12, dans lequel ladite couche monomoléculaire dudit ou desdits acides phosphoniques liée audit matériau support particulaire comprend un mélange de :

(a) environ 2 à environ 97% d'un ou plusieurs acides phosphoniques de formule $RPO(OH)_2$ dans laquelle R est un hydrocarbure aliphatique saturé ou insaturé de 5 à 30 atomes de carbone ou un hydrocarbure aromatique, et

(b) environ 5 à environ 75% d'un ou plusieurs acides phosphoniques de formule $R'PO(OH)_2$ dans laquelle R' est un hydrocarbure aliphatique saturé ou insaturé de 1 à 4 atomes de carbone.

**14.** Matériau de garnissage chromatographique selon l'une quelconque des revendications 10 à 13, dans lequel ledit acide phosphonique de formule $R'PO(OH)_2$ consiste essentiellement en acide méthylphosphonique qui est mis à réagir avec des groupes hydroxyles sur ledit matériau support après la réaction entre ledit matériau support et ledit ou lesdits acides phosphoniques de 5 à 30 atomes de carbone en une quantité suffisante pour réagir avec tous les sites hydroxyles réactifs restants sur ledit matériau support.

**15.** Procédé pour lier chimiquement une couche monomoléculaire de substance organique contenant du phosphore à des particules d'oxyde/hydroxyde métallique pour former un matériau actif, qui comprend :

(a) la fourniture d'un liquide contenant une substance organique comportant un ou deux groupes contenant du phosphore, consistant en :

(i) un acide phosphonique de formule $RPO(OH)_2$,
(ii) un acide phosphinique de formule $RR'PO(OH)$,
(iii) un monoester d'acide phosphorique de formule $(RO)PO(OH)_2$, ou
(iv) un diester d'acide phosphorique de formule $(RO)(R'O)PO(OH)$, où R comprend un groupe contenant du carbone et R' comprend un groupe contenant du carbone, et

(b) la mise en contact des particules d'oxyde/hydroxyde métallique avec ledit liquide pour lier chimiquement ladite substance contenant du phosphore à tous les groupes hydroxyles exposés sur la surface desdites particules d'oxyde/hydroxyde métallique pour former sur celles-ci une monocouche de ladite substance organique pour former ledit matériau actif.

**16.** Procédé selon la revendication 15, dans lequel les étapes sont accomplies dans une plusieurs des conditions suivantes :

(a) ladite étape consistant à fournir un liquide contenant une substance organique comportant un ou deux groupes contenant du phosphore comprend en outre le maintien dans ledit liquide d'une

concentration de ladite substance organique contenant du phosphore d'au moins environ 0,1 fois molaire,
(b) ladite étape consistant à mettre en contact lesdites particules d'oxyde/hydroxyde métallique avec ledit liquide contenant ladite substance organique contenant du phosphore comprend en outre le maintien dudit contact pendant environ 0,1 à environ 20 h,
(c) ladite étape consistant à mettre en contact lesdites particules d'oxyde/hydroxyde métallique avec ledit liquide contenant ladite substance organique contenant du phosphore comprend en outre le maintien dudit contact pendant environ 0,5 à environ 4 h,
(d) ladite étape consistant à mettre en contact lesdites particules d'oxyde/hydroxyde métallique avec ledit liquide contenant ladite substance organique contenant du phosphore comprend en outre le maintien de la température des corps réagissants à environ 5 à 150 ° C pendant ladite étape de mise en contact.

**17.** Procédé selon la revendication 15 ou 16, dans lequel lesdites particules d'oxyde/hydroxyde métallique et ladite substance contenant du phosphore sont telles que définies dans l'une quelconque des revendications 5 à 9.

**18.** Procédé de préparation d'un matériau actif utilisable comme matériau de garnissage chromatographique caractérisé par une bonne stabilité du pH et une efficacité élevée, comprenant :
(a) la réaction avec un matériau support d'oxyde/hydroxyde métallique particulaire ayant une plage de tailles de particules d'environ 0,5 à environ 300/µm, d'un ou plusieurs acides phosphoniques de formule $RPO(OH)_2$ dans laquelle R est un hydrocarbure aliphatique saturé ou insaturé de 5 à 30 atomes de carbone ou un hydrocarbure aromatique, pour former une couche monomoléculaire dudit ou desdits acides phosphoniques sur la surface dudit matériau support particulaire, et
(b) la réaction supplémentaire dudit matériau support particulaire avec un ou plusieurs acides phosphoniques de formule $R'PO(OH)_2$ dans laquelle R' est un hydrocarbure aliphatique saturé ou insaturé de 1 à 4 atomes de carbone en une quantité suffisante pour former des liaisons chimiques avec tous les sites hydroxyles réactifs restants sur ledit matériau support.

**19.** Procédé selon la revendication 18, qui comprend l'étape supplémentaire consistant à fournir un matériau support d'oxyde/hydroxyde métallique particulaire ayant une plage de diamètres de pores d'environ 20 à environ 100 00 Å, une plage de diamètres de pores d'environ 40 à environ 1 000 Å et un volume poreux d'environ 0,1 à environ 2 ml/g.

**20.** Procédé selon la revendication 18 ou 19, dans lequel les étapes sont accomplies dans une ou plusieurs des conditions suivantes :
(a) ladite étape de réaction supplémentaire dudit matériau support particulaire avec un ou plusieurs acides phosphoniques de formule $R'PO(OH)_2$ comprend la réaction supplémentaire dudit matériau particulaire avec l'acide méthylphosphonique,
(b) la concentration desdits acides phosphoniques est d'environ 0,0001 à environ 0,1 fois molaire,
(c) dans chacune desdites étapes, lesdits acides phosphoniques sont mis à réagir avec ledit matériau support dans un milieu non aqueux pendant une durée d'environ 1 h à environ 20 h au plus, à une température d'environ 5 ° C à environ 200 ° C, pour former ladite couche monomoléculaire sur ledit matériau support d'oxyde/hydroxyde métallique,
(d) dans chacune desdites étapes, lesdits acides phosphoniques sont mis à réagir avec ledit matériau support pendant une durée d'environ 1 h à environ 20 h au plus dans un milieu aqueux, à une température d'environ 25 ° C à environ 90 ° C, pour former ladite couche monomoléculaire sur ledit matériau support d'oxyde/hydroxyde métallique.

FIG. I

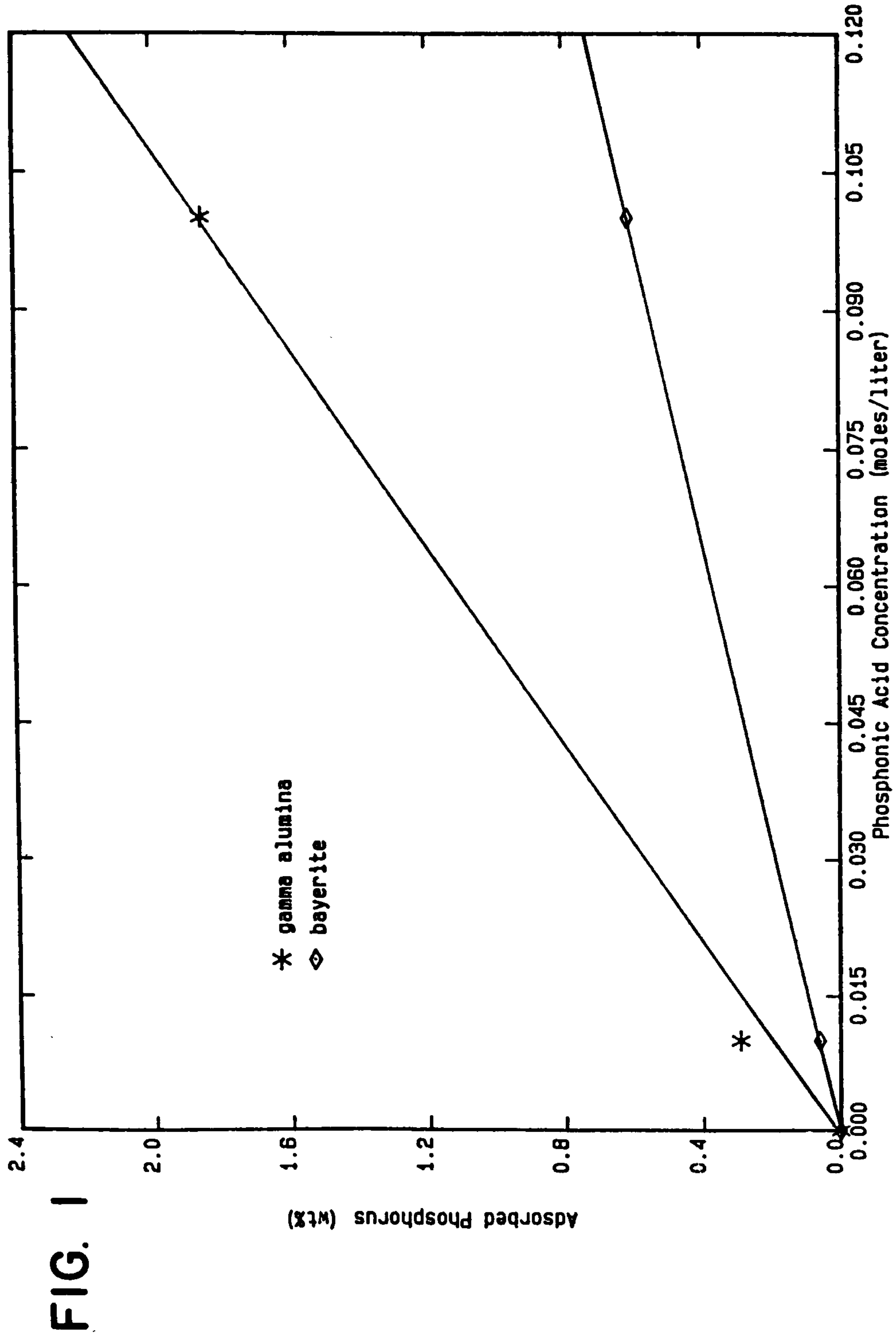


Weight Percent of Phosphorus
Adsorbed onto Bayerite and Gamma Alumina
as a Function of Phenylphosphonic Acid Concentration

FIG. 2

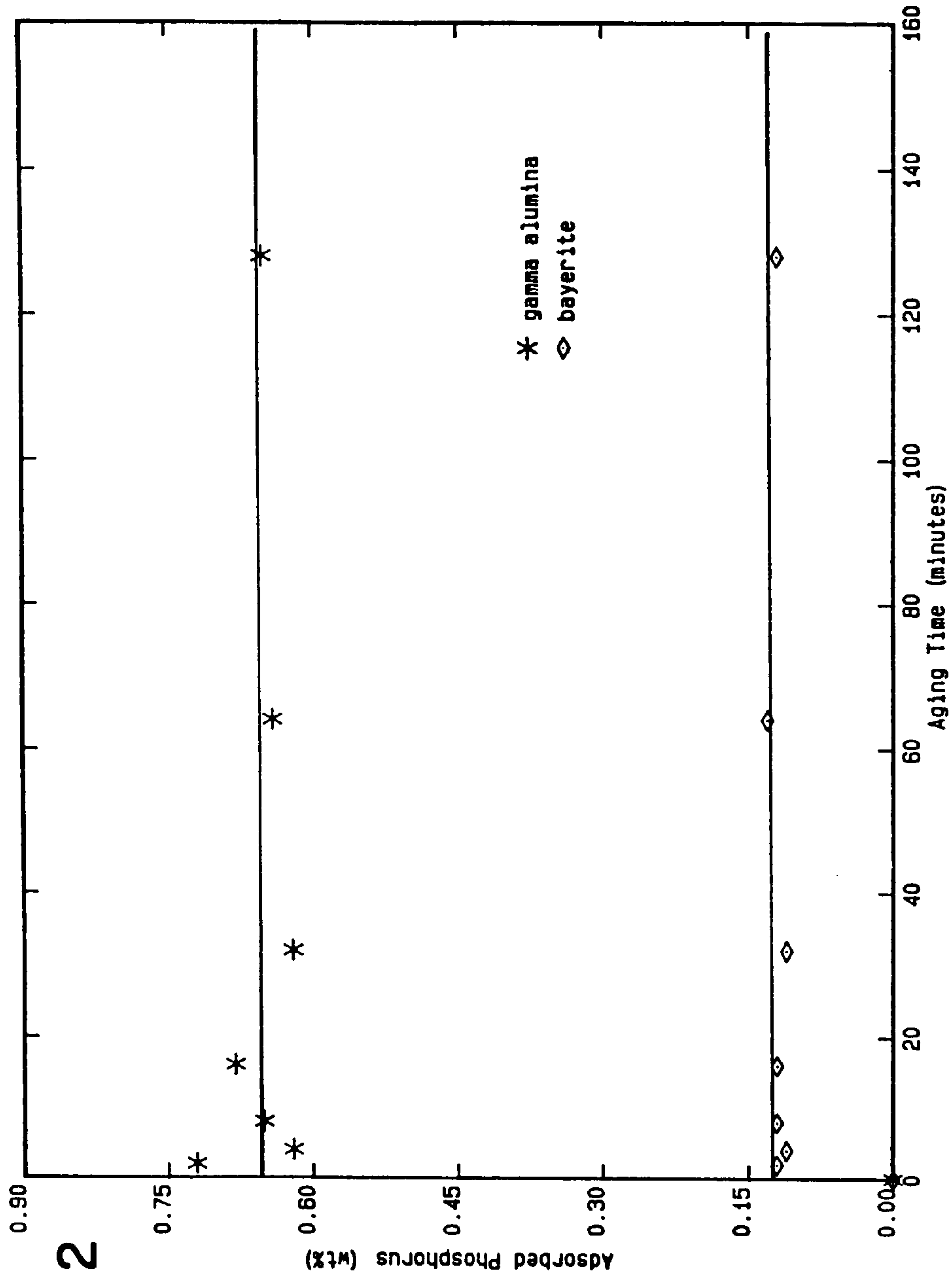


Weight Percent of Phosphorus
Adsorbed onto Bayerite and Gamma Alumina
as a Function of Aging Time

FIG. 3

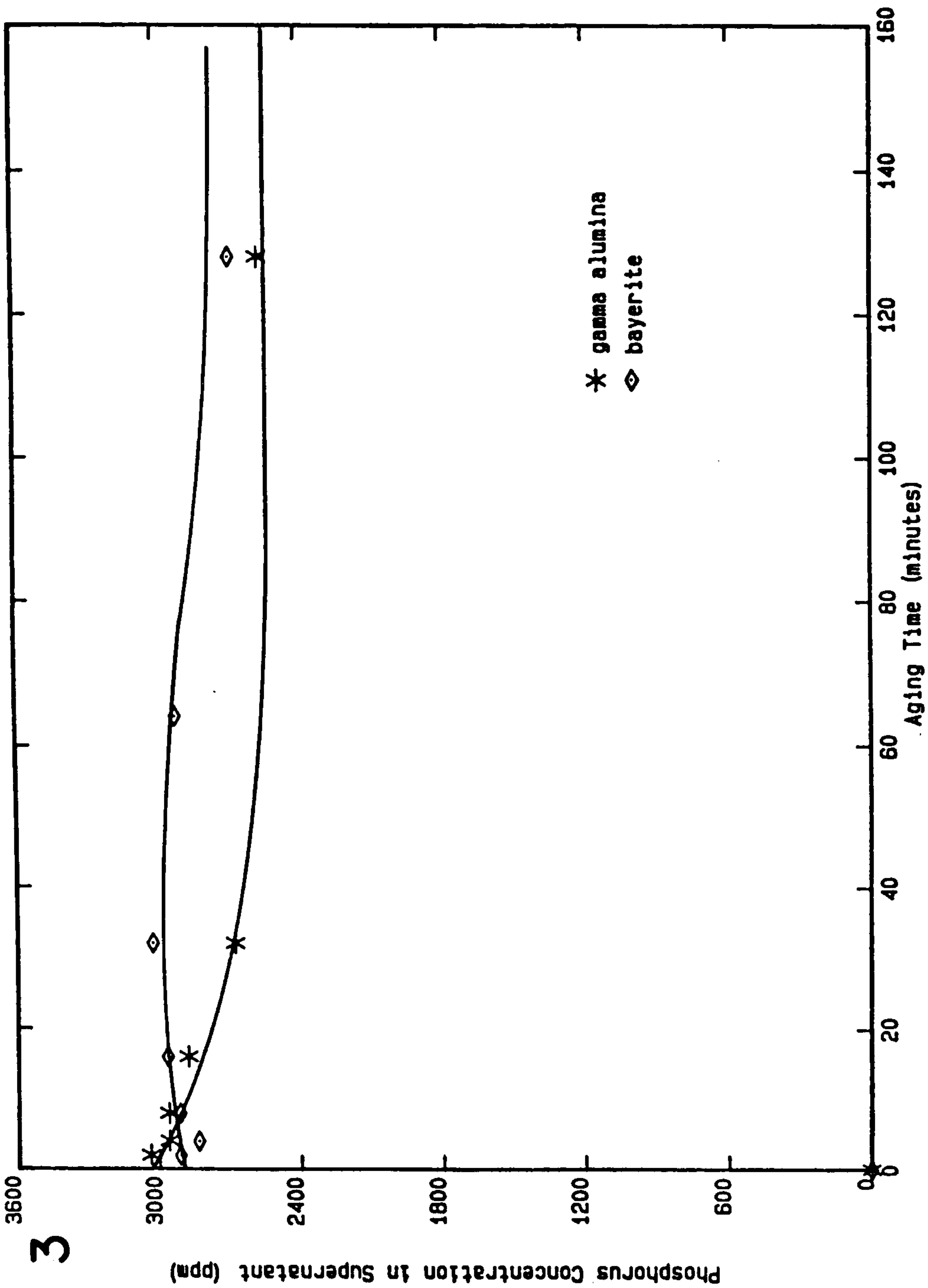


Concentration of Phosphorus Remaining in Solution after Filtration as a Function of Aging Time

FIG. 4

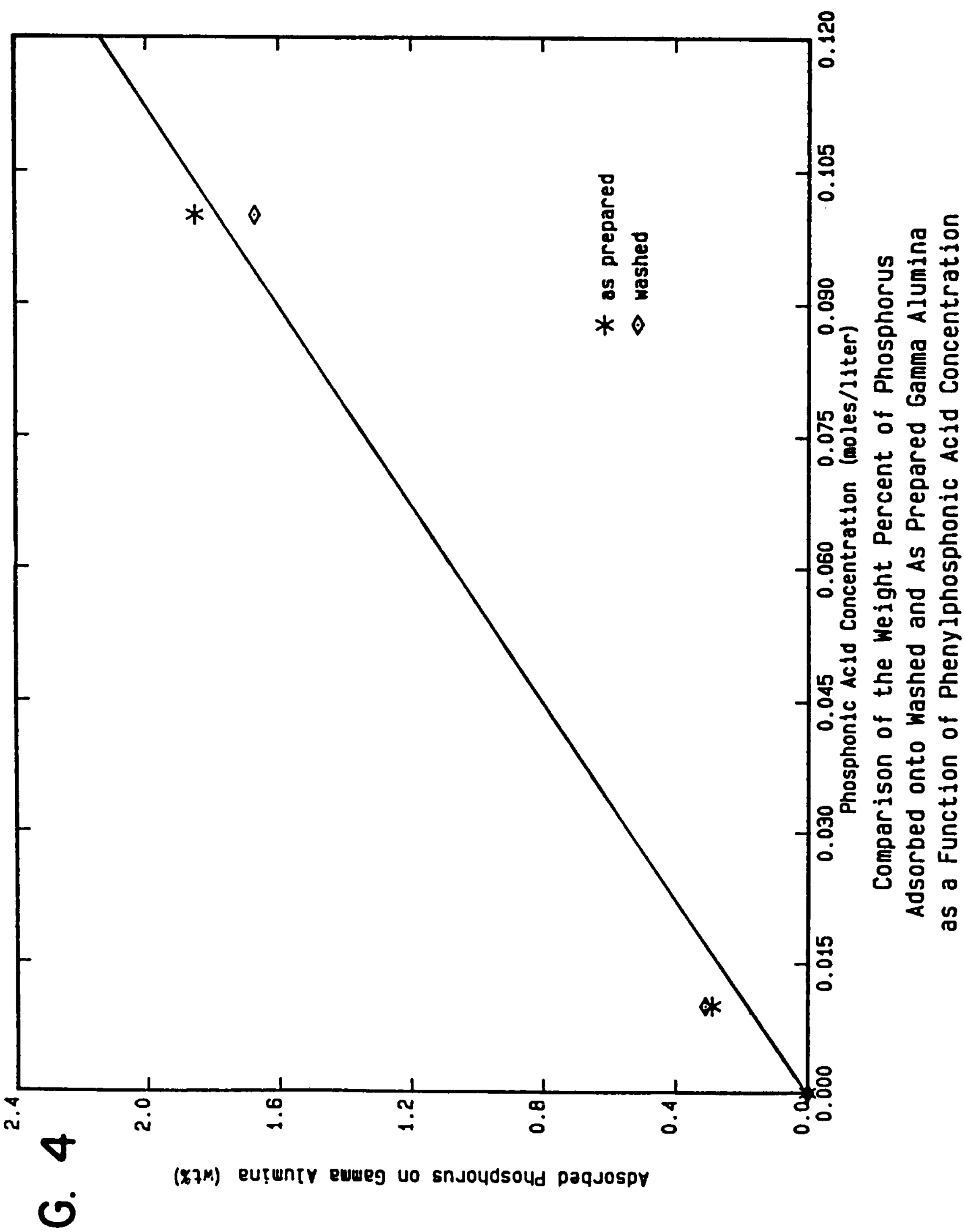


Comparison of the Weight Percent of Phosphorus
Adsorbed onto Washed and As Prepared Gamma Alumina
as a Function of Phenylphosphonic Acid Concentration

FIG. 5

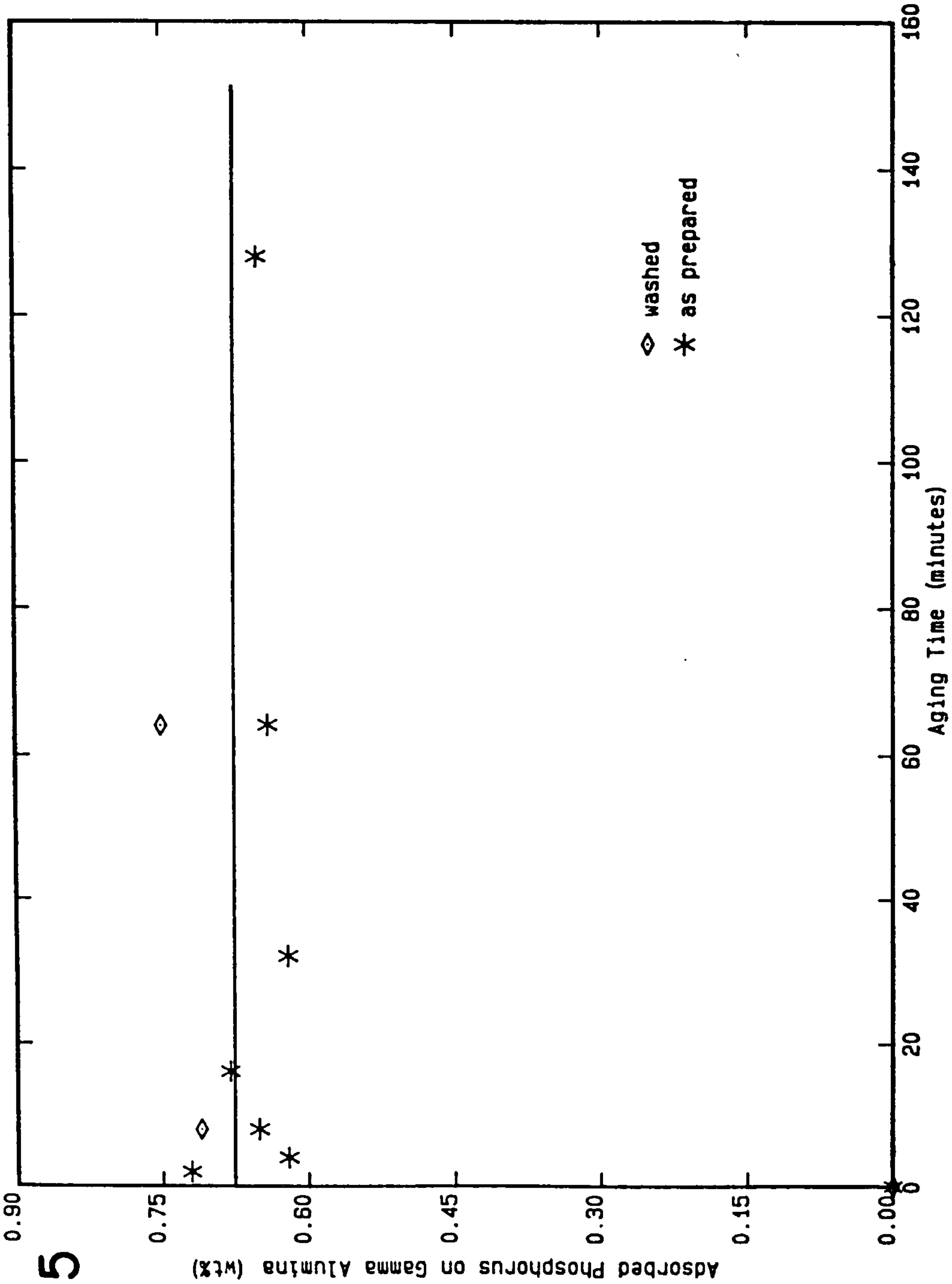


Comparison of the Weight Percent of Phosphorus
Adsorbed onto Washed and As Prepared Gamma Alumina
as a Function of Aging Time

FIG. 6

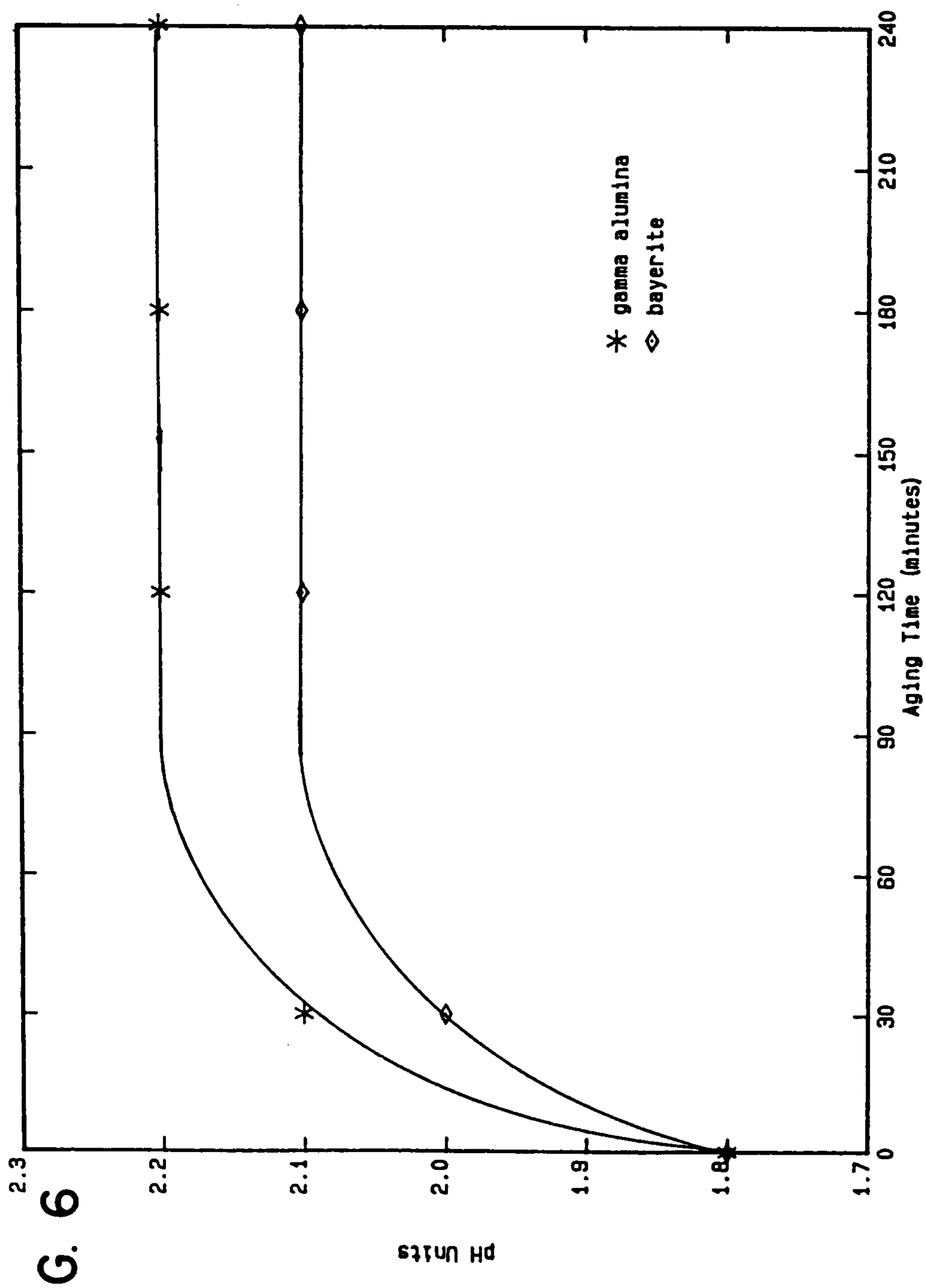


pH of the 24-Hour Bayerite and Gamma Alumina Time Study as a Function of Aging Time

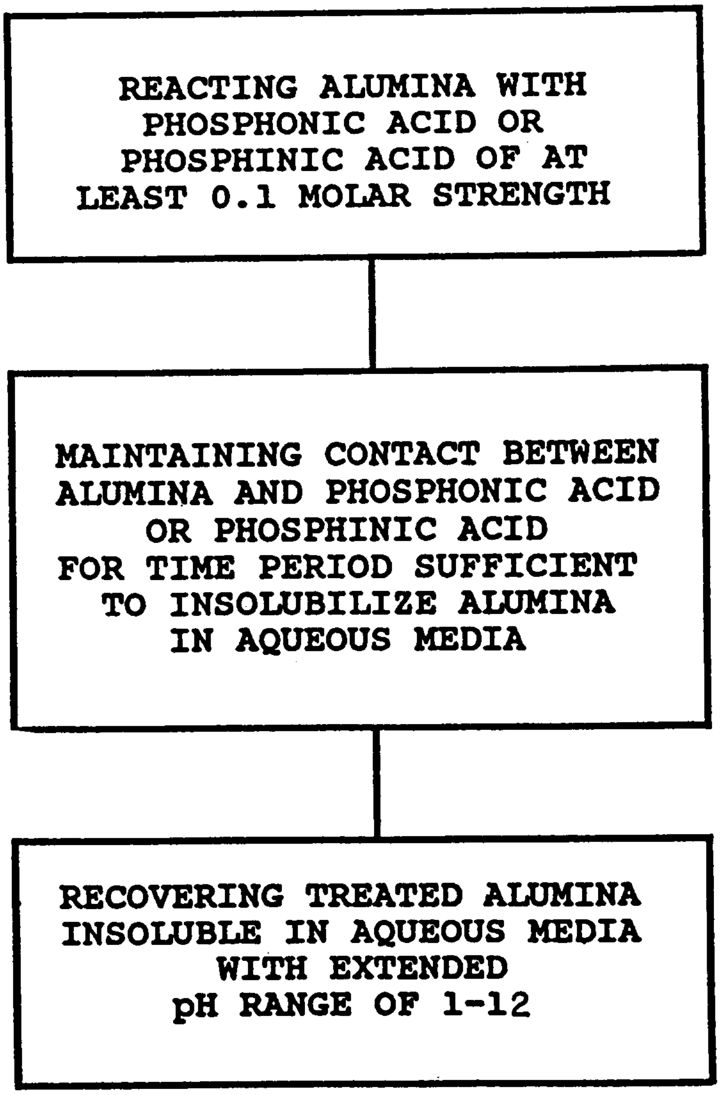
REACTING ALUMINA WITH PHOSPHONIC ACID OR PHOSPHINIC ACID OF AT LEAST 0.1 MOLAR STRENGTH
MAINTAINING CONTACT BETWEEN ALUMINA AND PHOSPHONIC ACID OR PHOSPHINIC ACID FOR TIME PERIOD SUFFICIENT TO INSOLUBILIZE ALUMINA IN AQUEOUS MEDIA
RECOVERING TREATED ALUMINA INSOLUBLE IN AQUEOUS MEDIA WITH EXTENDED pH RANGE OF 1-12

FIG. 7

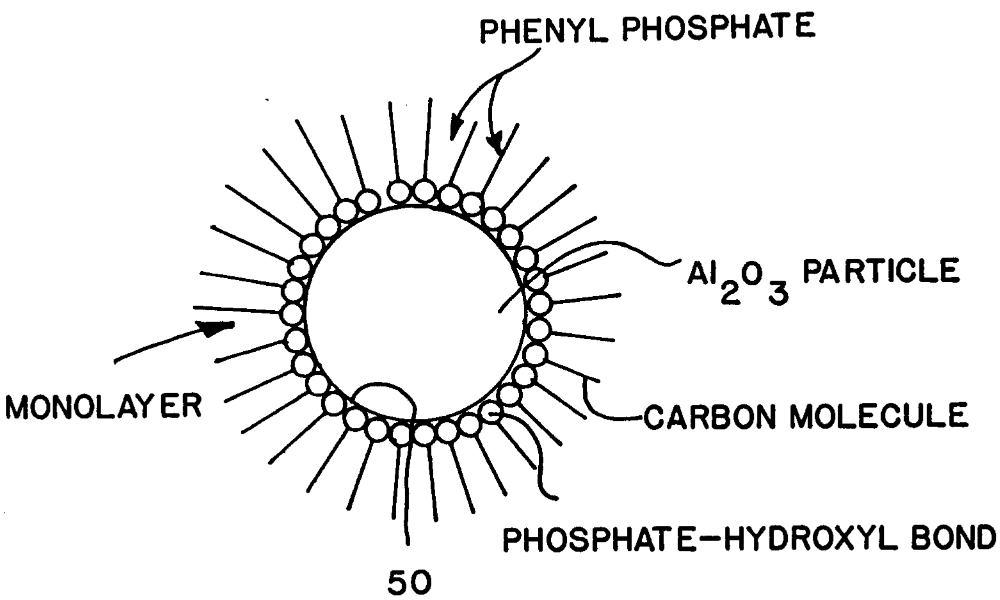
PHENYL PHOSPHATE
$Al_2O_3$ PARTICLE
MONOLAYER
CARBON MOLECULE
PHOSPHATE–HYDROXYL BOND
50

FIG. 8

R P ALUMINA -- CHROMATOGRAPHIC TESTS AT ELEVATED pH

MIX: p-NITROANILINE - I
METHYL BENZOATE - 2
PHENETOLE - 3
o-XYLENE - 4

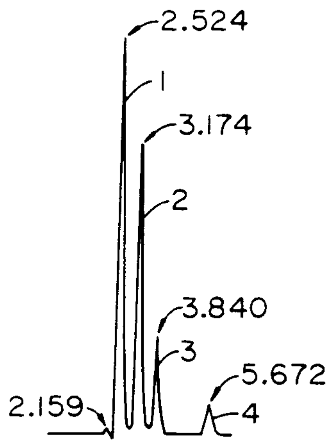


FIG. 9a
2 HRS at pH = 10
N = 26,000

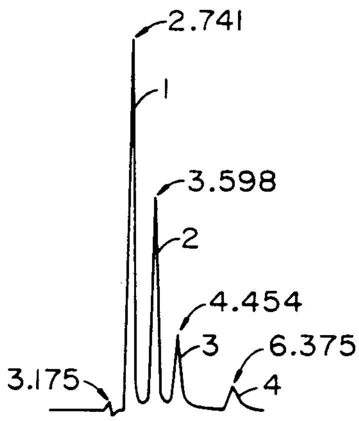


FIG. 9b
48 HRS at pH = 10
N = 19,000

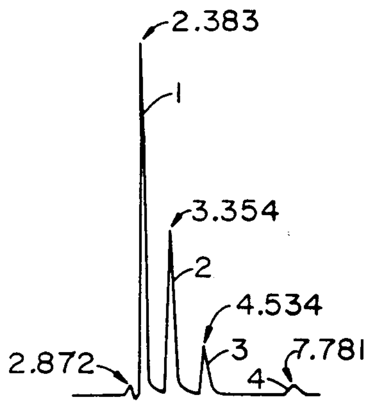


FIG. 9c
+48 HRS at pH = 12
N = 25,000

LONG-TERM STABILITY TO ALL TYPES OF HPLC SOLVENTS
EXCELLENT STABILITY TO pH = 10 & = 12 BUFFERS
(+48 & +12 HRS)
MINIMAL TAILING OF POLAR, BASIC COMPOUNDS (eg. ANILINE)
10 $\mu$m PARTICLE SIZE COLUMNS SHOW HIGH EFFICIENCY
(N > 25,000)